(19) Europäisches Patentamt
European Patent Office
Office européen des brevets

(11) EP 1 954 739 B1

(12) **FASCICULE DE BREVET EUROPEEN**

(45) Date de publication et mention de la délivrance du brevet:
**18.04.2012 Bulletin 2012/16**

(21) Numéro de dépôt: **06841816.9**

(22) Date de dépôt: **28.11.2006**

(51) Int Cl.:
***C08G 63/66** (2006.01)*

(86) Numéro de dépôt international:
**PCT/FR2006/002603**

(87) Numéro de publication internationale:
**WO 2007/060344 (31.05.2007 Gazette 2007/22)**

# (54) PROCEDE DE PREPARATION DE COPOLYMERES PAR POLYMERISATION ANIONIQUE SANS SOLVANT.

VERFAHREN ZUR HERSTELLUNG VON COPOLYMEREN DURCH LÖSUNGSMITTELFREIE ANIONISCHE POLYMERISIERUNG

PROCESS FOR PREPARING COPOLYMERS BY SOLVENTLESS ANIONIC POLYMERIZATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.11.2005 FR 0512001**

(43) Date de publication de la demande:
**13.08.2008 Bulletin 2008/33**

(73) Titulaires:
- **Centre National de la Recherche Scientifique 75016 Paris (FR)**
- **Université Montpellier 2 Sciences et Techniques 34095 Montpellier Cedex 5 (FR)**

(72) Inventeurs:
- **MAS, André**
**F-34980 St Gely Du Fesc (FR)**
- **GUERROUANI, Nadia**
**F-34000 Montpellier (FR)**
- **SCHUE, François**
**F-34000 Montpellier (FR)**

(74) Mandataire: **Vaillant, Jeanne et al**
**Ernest Gutmann - Yves Plasseraud S.A.S.**
**3, rue Auber**
**75009 Paris (FR)**

(56) Documents cités:
**WO-A-97/19973** **WO-A-2006/007402**
**US-B1- 6 201 072** **US-B1- 6 943 211**

- **RASHKOV, I. ET AL: "Synthesis, characterization, and hydrolytic degradation of PLA/PEO/PLA triblock copolymers with short poly(L-lactic acid) chains Synthesis, characterization, and hydrolytic degradation of PLA/PEO/PLA triblock copolymers with short poly(L-lactic acid) chains" MACROMOLECULES , 29(1), 50-56 CODEN: MAMOBX; ISSN: 0024-9297 MACROMOLECULES , 29(1), 50-6 CODEN: MAMOBX; ISSN: 0024-9297, 1996, XP002390011 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 954 739 B1

## Description

La présente demande concerne un procédé de préparation d'un copolymère à blocs ou en peigne comprenant au moins une partie hydrophile et au moins deux parties hydrophobes, ainsi que les copolymères obtenus par ce procédé.

Le procédé de l'invention est destiné à préparer des copolymères à blocs ou en peigne comprenant des segments hydrophiles portant des groupes hydroxyle, et des segments hydrophobes de type polylactone. De tels copolymères sont connus comme étant des copolymères biodégradables et non toxiques, et capables de former des micelles en phase aqueuse.

WO97/19973 et Rashkov et al., [Macromolecules, 1996, 29, pp.50-56], décrivent la copolymérisation de poly (éthylène glycol) et de lactone sans solvant. Le procédé comprend les étapes consistant à dégazer le mélange réactionnel (placé dans un ballon) sous vide, à le chauffer sous atmosphère d'argon à 140°C jusqu'à ce que le mélange soit sous forme liquide, à mettre ensuite sous vide de $10^{-2}$mm/Hg, puis à sceller le ballon et à le maintenir dans un four à 140°C pendant 7 jours. La réaction est effectuée en présence d'hydrure de calcium en tant que catalyseur. Toutefois, dans ce procédé, il est nécessaire d'utiliser un dispositif performant de dégazage pour pouvoir travailler sous vide partiel. L'installation et la mise en oeuvre d'un tel dispositif alourdissent le procédé de synthèse au niveau du laboratoire (montages de Schlenk, étanchéité, tubes scellés, pompes à vide...), mais beaucoup plus encore au niveau industriel pour une production plus importante. Les coûts engendrés par ces dispositifs sont importants et constituent un obstacle à la mise en oeuvre de ce procédé à l'échelle industrielle.

Le but de la présente invention est de fournir un procédé plus simple et moins onéreux, pour la préparation de copolymères à blocs ou en peigne comprenant des segments hydrophiles et des segments hydrophobes.

Selon un premier aspect, l'invention a pour objet un procédé de préparation d'un copolymère à blocs ou en peigne comprenant au moins une partie hydrophile et au moins deux parties hydrophobes, par polymérisation anionique sans solvant d'un prépolymère choisi parmi un poly(éthylène glycol) et un alcool polyvinylique, et d'un monomère lactone ou dilactone, en présence d'un hydrure de métal alcalino-terreux, ledit procédé étant mis en oeuvre sous atmosphère inerte, l'étape de polymérisation n'étant pas effectuée sous vide.

La mise en présence du prépolymère et de l'hydrure provoque la formation d'un alcoolate, qui agit ensuite comme amorceur sur le groupe carbonyle de la lactone ou de la dilactone avec formation d'un copolymère tribloc polyalcanoate-b-polymère-b-polyalcanoate ou d'un copolymère en peigne ayant une chaîne principale sur laquelle sont greffées plusieurs chaînes polylactones, selon la nature du prépolymère.

Dans le procédé selon l'invention, l'étape de polymérisation n'est donc pas effectuée sous vide, comme dans les procédés de l'art antérieur cités plus haut, mais sous atmosphère inerte. Ces conditions opératoires permettent une mise en oeuvre à l'échelle industrielle puisqu'il n'est pas nécessaire d'utiliser un dispositif complexe de mise sous vide partiel lors du processus de polymérisation.

En outre, le procédé selon l'invention présente, par rapport à l'état de la technique cité, l'avantage de pouvoir être mis en oeuvre avec des conditions opératoires améliorées. Ces conditions consistent notamment en une diminution de l'ordre de 20 à 30°C de la température de polymérisation, une durée de réaction sensiblement identique pour la synthèse de copolymères de faible masse molaire (masse molaire comprise environ entre 2 500 et 4 000), et une durée de réaction nettement diminuée pour la synthèse de copolymères de masse molaires élevées (masse molaire comprise entre 4 000 et 70 000), pour obtenir des copolymères identiques, en termes de structure de l'enchaînement et de masse molaire, à ceux qui sont obtenus par les procédés plus complexes de l'art antérieur.

Un autre avantage du procédé selon l'invention est d'utiliser un système d'amorçage biocompatible et peu onéreux, d'être mis en oeuvre en l'absence de tout solvant, ce qui évite la formation de résidus toxiques, et de permettre l'utilisation directe des copolymères obtenus sans purification particulière, puisque tous les composants présents dans le milieu final sont biocompatibles.

Selon une réalisation préférée, l'hydrure est choisi parmi l'hydrure de calcium $CaH_2$ et l'hydrure de magnésium $MgH_2$.

La masse molaire moyenne du prépolymère peut être choisie dans une large gamme. On peut utiliser par exemple un prépolymère PEG ayant une masse molaire entre 600 et 10 000, ou un prépolymère PVA ayant une masse molaire moyenne entre 15 000 et 190 000.

Le monomère lactone peut être choisi parmi le L-lactide (LLA), le glycolide (GA), la $\beta$-butyrolactone (BL), la $\delta$-valérolactone (VL) et la $\varepsilon$-caprolactone (CL).

L'atmosphère inerte dans le réacteur est avantageusement une atmosphère d'argon. On peut également effectuer la réaction sous atmosphère d'azote.

Le choix et les proportions des produits de départ, à savoir de monomère, de prépolymère et de l'hydrure, permettent d'orienter la composition du copolymère final, ainsi que la nature et le nombre des unités répétitives, c'est-à-dire la longueur des blocs hydrophobes et la longueur du bloc hydrophile lorsqu'il s'agit d'un copolymère tribloc, et la longueur du segment hydrophile et le nombre et la longueur des segments hydrophobes greffés sur ledit segment hydrophile lorsqu'il s'agit d'un copolymère en peigne. Ces longueurs respectives déterminent l'équilibre entre le caractère

hydrophile et le caractère hydrophobe du copolymère obtenu.

Le degré de polymérisation DP dépend de la teneur en unités monomère t(mon) et de la teneur en hydrure T (hyd), par la relation DP = t(mon)/2xT(hyd).

Le taux de substitution des groupes DS dépend de T(hyd) et de la teneur en unités monomère du prépolymère T(prep), par la relation DS = 2xT(hyd)/T(prep).

Le rendement molaire dépend du rapport molaire lactone/prépolymère, et de divers autres facteurs tels que par exemple le degré de solubilité de la lactone dans le prépolymère. A titre d'exemple, pour obtenir un rendement molaire entre 50% et 80%, il est préférable d'utiliser les rapports suivants :

- pour un copolymère PVA-g-PLLA : LLA/PVA entre 3 et 60 :
- pour un copolymère ε-CL/PVA : ε-CL/PVA supérieur à 1,5.

La détermination des rapports appropriés pour les autres copolymères est à la portée de l'homme de métier.

Il est noté que, lors de la préparation de copolymères à blocs ou en peigne en utilisant un monomère lactone ou dilactone (composés qui ont un carbone asymétrique), le procédé de la présente invention permet d'obtenir des copolymères comprenant des enchaînements qui sont stéréoréguliers et qui ont la même configuration que le monomère lactone ou dilactone utilisé, ce qui signifie que la polymérisation s'effectue sans isomérisation. Il est noté que le procédé de l'art antérieur précité donne un copolymère isomérisé [Cf. Rashkov et al., (Macromolecules, 196, 29, pp.57-62)]. Des exemples détaillés montrant la stéréorégularité des copolymères obtenus selon la présente invention sont présentés plus loin.

Lorsque le prépolymère est un poly(éthylène glycol), la polymérisation peut être mise en oeuvre à une température de 115°C à 125°C pendant une durée de 14 à 16 heures. Une diminution de la température implique une augmentation de la durée, par exemple 70°C pendant 48 heures.

Lorsque le prépolymère est un alcool polyvinylique, la polymérisation est par exemple mise en oeuvre à une température de 140°C à 150°C pendant une durée de 36 à 54 heures. Une durée plus courte à cette température ne permet pas d'obtenir une réaction totale et le rendement est plus faible.

Les inventeurs ont en outre constaté que, bien que la température de fusion d'un alcool polyvinylique (PVA) soit très proche de sa température de dégradation (environ 160°C-180°C), la réaction d'un alcool polyvinylique avec une lactone sans solvant (qui implique que le PVA soit à l'état fondu) se produit sensiblement sans dégradation lors de la mise en oeuvre du procédé selon l'invention. Ils en ont déduit que le mélange lactone ou dilactone et hydrure de métal alcalino-terreux agit comme plastifiant du PVA, et diminue ainsi sa température de fusion, la rendant bien inférieure à sa température de dégradation. Des exemples comparatifs démontrant la quasi-absence de dégradation des copolymères à base de PVA obtenus par le procédé selon l'invention, par rapport aux mêmes copolymères obtenus dans les conditions opératoires décrites dans l'art antérieur précité [Rashkov et al., (Macromolecules, 1996, 29, pp.57-62)] sont présentés plus loin.

La demande décrit les copolymères obtenus par le procédé selon l'invention.

Il s'agit de copolymères à blocs ou de copolymères en peigne.

Selon un deuxième aspect, l'invention concerne des copolymères pouvant être obtenus par le procédé de l'invention et comprenant des unités récurrentes $-CH_2-CH(OH)-$ et des unités récurrentes $-CH_2-CH(OR)-$ où R est une chaîne de polylactone.

Un copolymère à blocs comprend un bloc PEG entre deux blocs poly(lactone). Les unités récurrentes des blocs poly(lactone) sont dérivées d'un monomère choisi par exemple parmi le L-lactide, le glycolide, la β-butyrolactone, la δ-valérolactone et la e-caprolactone. Les copolymères à blocs correspondent par exemple aux formules suivantes, dans lesquels m représente le nombre d'unités récurrentes oxyde d'éthylène du PEG initial, et n représente le nombre d'unités récurrentes des unités lactones.

**PLLA-b-PEG-b-PLLA**

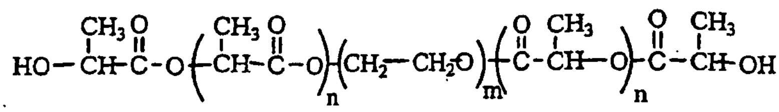

PGA-b-PEG-b-PGA

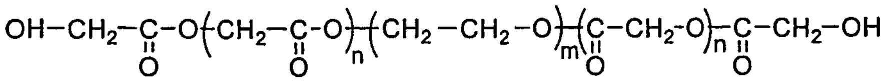

PBL-b-PEG-b-PBL

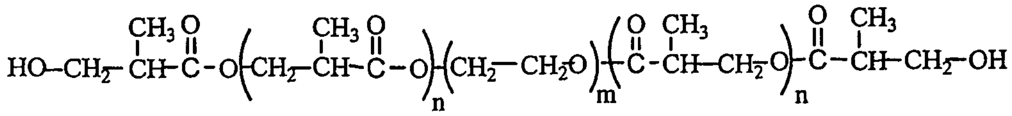

PVL-b-PEG-b-PVL

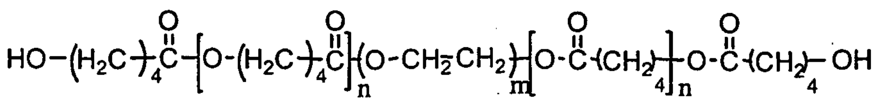

PCL-b-PEG-b-PCL

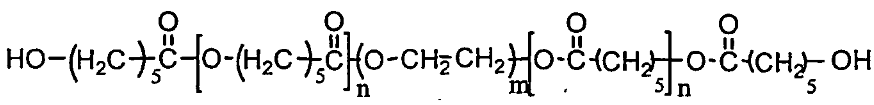

Les copolymères en peigne comprennent des unités récurrentes -$CH_2$-CH(OH)- et des unités récurrentes -$CH_2$-CH(OR)- dans lesquelles R représente une chaîne polylactone. La chaîne polylactone est dérivée par exemple d'un monomère choisi parmi le L-lactide, le glycolide, la β-butyrolactone, la δ-valérolactone et la ε-caprolactone. Les copolymères correspondent par exemple aux formules suivantes dans lesquelles m correspond au nombre d'unités récurrentes du PVA qui n'ont pas été modifiées, n représente le nombre d'unités récurrentes sur lesquelles une chaîne poly(lactone) a été greffée, et p représente le nombre d'unités dérivées de la lactone.

PVA-g-PLA

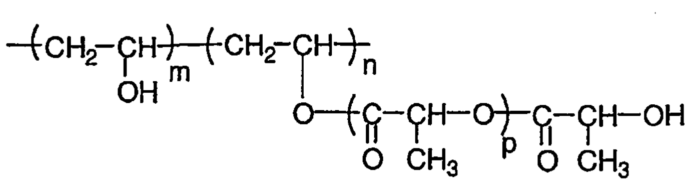

**PVA-g-PGA**

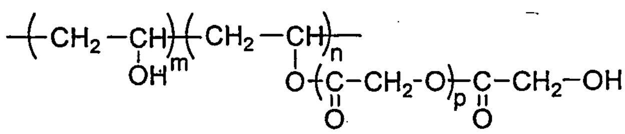

**PVA-g-PBL**

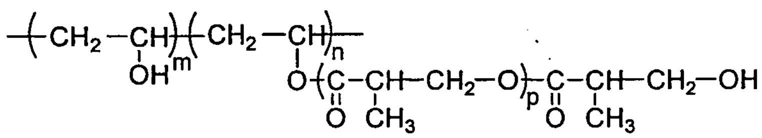

**PVA-g-PVL**

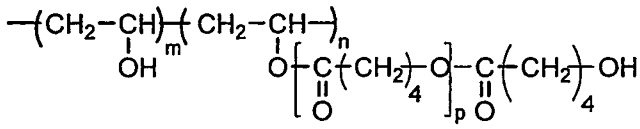

**PVA-g-PCL**

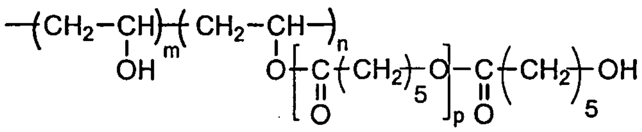

Dans les formules ci-dessus :

- PEG désigne le bloc poly(éthylène) glycol ;
- PLA désigne le bloc poly(lactide) ;
- PCL désigne le bloc poly(caprolactone) ;
- PBL désigne le bloc poly(butyrolactone) ;
- PGA désigne le bloc poly(glycolide) ou poly(acide glycolique) ;
- PVL désigne le bloc poly(valérolactone).

La présente invention est illustrée ci-après par des exemples concrets de réalisation, auxquels elle n'est cependant pas limitée. Ces exemples décrivent de façon détaillée la synthèse et la caractérisation de divers copolymères.

Les techniques mises en oeuvre pour la caractérisation des copolymères sont la résonance magnétique nucléaire du proton (RMN-$^1$H), et celle du carbone (RMN-$^{13}$C), la chromatographie par perméation de gel (GPC), l'analyse enthalpique différentielle (DSC), et l'analyse IR.

La RMN-$^1$H permet de déterminer la structure des copolymères obtenus, ainsi que leur masse molaire moyenne en nombre (Mn).

Les spectres RMN-$^1$H des copolymères à blocs présentent le signal caractéristique du PEG à 3,5 ppm. La présence des unités lactone est mise en évidence par les signaux, sous forme de massifs, du groupement méthyle dans

le cas du lactide et de la butyrolactone ainsi que par les signaux relatifs au groupement $-(CH_2)_n-$ dans le cas des unités caprolactone.

Pour les copolymères à blocs contenant PEG, la relation ci-dessous permet de déduire le rapport des unités monomères MO/EO, MO désignant l'unité lactone, EO désignant l'unité oxyde d'éthylène. La masse moyenne en nombre du copolymère peut être calculée à partir du rapport MO/EO par la relation suivante dans laquelle I représente l'intégration du pic du proton du spectre RMN-$^1$H :

$$MO/EO = (\text{nbr de proton de la lactone à un signal donné}) \times I_{\text{Lactone à ce signal}}/I_{\text{PEG (3,5)}}$$

$$Mn\ (RMN) = M_{PEG} + M_{Lactone} = M_{PEG} + (\text{Masse de lactone} \times M_{PEG}/44 \times MO/EO)$$

$M_{PEG}$ représente la masse molaire moyenne en nombre du PEG utilisé pour la synthèse du copolymère.

Pour les copolymères en peigne contenant PVA, le spectre RMN-$^1$H permet de mettre en évidence les jonctions esters entre les blocs hydrophiles et hydrophobes, d'évaluer le pourcentage du greffage par la présence de signaux du PVA dans les spectres, et de déduire le degré de substitution DS des groupements OH du PVA, par la formule suivante :

$$DS=2I_{x'}/I_{1-1,7}-3(I_a+I_{a'}),$$

dans laquelle $I_{x'}$ est l'intensité du pic correspondant à CH-O greffé, $I_{1-1,7}$ est l'intensité des $CH_2$ greffés et non greffés du PVA et des $CH_3$ des chaînes PLA, et $I_a+I_{a'}$ est l'intensité des $CH(CH_3)$ des chaînes PLA.

La RMN-$^{13}$C permet de préciser la configuration des carbones asymétriques de l'enchaînement.

La GPC a été réalisée dans le chloroforme avec un débit de 1 ml/s. Les chromatogrammes des copolymères synthétisés présentent une seule courbe de distribution et conduisent à des valeurs de Mn, Mw et Ip déterminées par rapport à un étalonnage polystyrène.

La DSC permet de déterminer la température de transition vitreuse (Tg), la température de fusion (Tf) et la température de cristallisation (Tc) des copolymères, ainsi que les enthalpies de fusion et les variations de capacité calorifique des polymères.

Pour les copolymères en peigne comprenant PVA, l'étude IR permet d'identifier les fonctions caractéristiques, c'est-à-dire les fonctions esters et les fonctions alcools parmi lesquelles certaines sont liées et d'autres sont libres.

**Exemple 1**

**Préparation d'un copolymère PLLA-PEG-PLLA**

Préparation du copolymère

Dans un ballon préalablement séché à l'étuve à 110°C pendant 2 h et maintenu sous atmosphère d'argon, on introduit 0,069 mmol de PEG2000 pur (PEG ayant une Mn de 2000), 6,9 mmol de monomère L-Lactide, et 0,069 mmol de $MgH_2$, tous les réactifs étant au préalable parfaitement déshydratés. On laisse le mélange réactionnel à la température de 120°C pendant une durée de 16 heures.

On obtient ainsi un copolymère PLLA-PEG-PLLA avec un rendement de 70% et un taux de conversion du L-lactide proche de 100%. Le fait que le rendement soit inférieur au taux de conversion s'explique par la perte de copolymère au cours de la purification et par la solubilité plus élevée des fractions de faibles masses molaires dans le solvant de précipitation utilisé.

Caractérisation du copolymère

La figure 1 représente le spectre RMN-$^1$H du copolymère. La masse molaire Mn, calculée par la formule donnée

ci-dessus, est Mn = 13800.

La figure 2 représente le chromatogramme GPC du copolymère. On en déduit les valeurs suivantes : Mn = 12 500, Mw = 15 000, Ip = 1,2. La masse molaire déterminée par RMN et par GPC, et la masse molaire calculée sont en bon accord. L'indice de polymolécularité est faible.

La figure 3 représente le thermogramme obtenu par DSC. Elle montre que le copolymère a une Tg = 22°C, comprise entre la Tg du PEG (-50°C) et celle du PLLA (50°C), et une température de fusion Tf= 136°C, elle aussi comprise entre la température de fusion du PEG (60°C) et celle du PLLA (140°C).

La figure 4 représente le spectre RMN-$^{13}C$ du copolymère du présent exemple, et la figure 5 représente le spectre RMN-$^{13}C$ d'un copolymère préparé selon l'art antérieur (Cf. Rashkov précité), à une température de 140°C pendant 4 jours. La figure 4 montre l'absence d'isomérisation c'est-à-dire l'absence des pics relatifs aux enchaînements comportant des unités lactide de configuration D ou D-L, alors que sur la figure 5, ces pics de faibles intensités, situés de 169,25 à 169,5 ppm attribués au CO et à 69,04 ppm attribués à CH, sont visibles.

**Exemple 2**

**Préparation d'un copolymère PCL-PEG-PCL**

On a reproduit le mode opératoire de l'exemple 1 pour préparer un copolymère PCL-PEG-PCL, en utilisant :

- 0,069 mmol de PEG 2000 (pur)
- 6,9 mmol de ε-caprolactone (pur)
- 0,069 mmol $MgH_2$
- une température de 120°C et une durée de 14 heures.

On obtient ainsi un copolymère PCL-PEG-PCL avec un rendement de 90%.

La figure 6 représente le spectre RMN-$^{1}H$ du copolymère. La masse molaire Mn, calculée par la formule donnée ci-dessus, est Mn = 14 500.

La figure 7 représente le chromatogramme GPC du copolymère. On en déduit les valeurs suivantes : Mn = 15 000, Mw = 17 800 Ip = 1,18.

La figure 8 représente le thermogramme obtenu par l'analyse par enthalpie différentielle. Elle montre que le copolymère a une Tg = -58°C, et une température de fusion Tf= 57°C.

**Exemple 3**

**Préparation d'un copolymère PBL-PEG-PBL**

On a reproduit le mode opératoire de l'exemple 1 pour préparer un copolymère PBL-PEG-PBL, en utilisant :

- 0,069 mmol de PEG 2000 (pur)
- 13,8 mmol de β-butyrolactone (pur)
- 0,069 mmol $MgH_2$
- une température de 120°C et une durée de 12 heures.

On obtient ainsi un copolymère avec un rendement de 54%.

La figure 9 représente le spectre RMN-$^{1}H$ du copolymère. La masse molaire Mn, calculée par la formule donnée ci-dessus, est Mn = 15 200.

La figure 10 représente le thermogramme obtenu par l'analyse par enthalpie différentielle. Elle montre que le copolymère a une Tg = -21°C, comprise entre la Tg du PEG (-50°C) et celle du PBL (15°C).

La figure 11 représente le chromatogramme GPC du copolymère. On en déduit les valeurs suivantes : Mn = 7 000, Mw = 9 100, Ip = 1,3.

**Exemple 4**

**Préparation d'un copolymère PVA-g-PLLA**

On prépare un copolymère PVA-g-PLLA en mélangeant dans un ballon placé dans une boîte à gant sous argon sec, le L-lactide pur, un PVA ayant une Mn entre 31 000 et 51 000, et $CaH_2$.

Le mélange est déshydraté par mise sous vide pendant deux heures, puis il est soumis à une atmosphère

d'argon et chauffé à 150°C sous agitation, et la température est maintenue pendant 48 h.

Le produit obtenu répond à la formule :

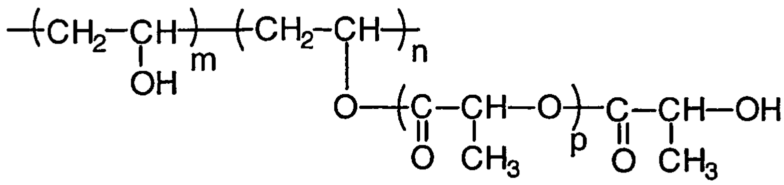

Plusieurs échantillons ont été préparés en faisant varier les quantités de réactifs et les conditions de réaction. Le résultat est indiqué dans le tableau I ci-dessous. Le degré de polymérisation DP et le degré du substitution DS sont prédéterminés. Les quantités des réactifs sont calculées par rapport à l'unité monomère, en fonction du degré de polymérisation et du taux de OH greffés souhaités. Par exemple, pour l'échantillon n° 1,
DP = LLA/2x$CaH_2$, c'est-à-dire 13,88/2x0,65
DS = 2x$CaH_2$/PVA, c'est-à-dire 2x0,65/10,5

**Tableau I**

| | PVA (mmol) | LLA (mmol) | $CaH_2$ (mmol) | DP | DS | DSC Tg(°C) | Rendement molaire % |
|---|---|---|---|---|---|---|---|
| 1 | 10,5 | 13,88. | 0,65 | 10,6 | 12,5 | 40 | 5 |
| 2 | 5,25 | 13,88 | 0,33 | 21,0 | 12,5 | 41 | 67 |
| 3 | 3,5 | 13,88 | 0,22 | 31,5 | 12,5 | 44 | 50 |
| 4 | 2,62 | 13,88 | 0,16 | 43,4 | 12,5 | 42 | 50 |
| 5 | 2,1 | 13,88 | 0,13 | 53,4 | 12,5 | 44 | 68 |
| 6 | 1,05 | 13,88 | 0,07 | 99,0 | 12,5 | 50 | 80 |
| 7 | 0,34 | 13,88 | 0,2 | 34,5 | 80 | 44 | 72 |
| 8 | 0,36 | 13,88 | 0,2 | 34,5 | 75 | 44 | 57 |
| 9 | 0,39 | 13,88 | 0,2 | 34,5 | 67 | 47 | 65 |
| 10 | 0,53 | 13,88 | 0,2 | 34,5 | 50 | 43 | 66 |
| 11 | 1,05 | 13,88 | 0,2 | 34,5 | 25 | 48 | 74 |
| 12 | 2,69 | 13,88 | 0,2 | 34,5 | 12,5 | 44 | 68 |
| 13 | 3,15 | 13,88 | 0,2 | 34,5 | 8 | 42 | 52 |
| 14 | 4,20 | 13,88 | 0,2 | 34,5 | 6 | 42 | 62 |
| 15 | 5,34 | 13,88 | 0,2 | 34,5 | 5 | 48 | 30 |
| 16 | 8,03 | 13,88 | 0,2 | 34,5 | 3,3 | 50 | 15 |
| 17 | 13,32 | 13,88 | 0,2 | 34,5 | 2 | 45 | 11 |

Les résultats montrent que dans tous les cas, le greffage de chaînes poly(lactone) a eu lieu. Les faibles rendements des exemples 1, 16 et 17 sont dus à la valeur élevée du rapport molaire PVA/lactone. Pour obtenir un rendement entre 50 et 80%, il est préférable d'utiliser un rapport LLA/PVA entre 3 et 60.

Il est noté que la valeur du Tg du copolymère varie peu en fonction des conditions de préparation.

La figure 12 représente le spectre RMN-$^1$H de l'échantillon 1 du tableau I. Tous les signaux sont présents, mais ils sont partiellement superposés. Seul le signal de la jonction à 5,1 ppm reste identifiable pour le PVA. Le degré de substitution DS peut en être déduit par la formule :

$$DS=2I_{x'}/I_{1-1,7}-3(I_a+I_{a'}),$$

dans laquelle $I_{x'}$ est l'intensité du pic correspondant à CH-O greffé, $I_{1-1,7}$ est l'intensité de 1 à 1,7 ppm, et $I_a+I_{a'}$ est l'intensité des $CH(CH_3)$ des chaînes PLA.

Les thermogrammes obtenus par DSC ont montré la présence d'une seule température de transition vitreuse qui est plus proche de celle du PLLA étant donné la forte quantité de la lactone par rapport au PVA. La figure 13 représente les thermogrammes des échantillons 2, 3, 4 et 5 du tableau I.

La figure 14 représente le spectre IR de l'échantillon 3 du tableau I. Elle permet d'identifier les fonctions caractéristiques du copolymère :

- les fonctions esters à 1757 $cm^{-1}$;
- les fonctions alcools à 3683, 3622 et 3455 $cm^{-1}$ dont certaines correspondent aux -OH de bout des chaînes de PLLA et d'autres aux -OH du PVA qui ne sont pas greffés ;
- les liaisons C-O à 1216 et 1092 $cm^{-1}$.

**Exemple 5**

**Préparation d'un copolymère PVA-g-PCL**

On prépare un copolymère PVA-g-PCL en mélangeant dans un ballon placé dans une boîte à gant sous argon sec, la ε-caprolactone (ε-Cl), un PVA ayant une Mn entre 31 000 et 51 000, et $CaH_2$.

Le mélange est déshydraté par mise sous vide pendant deux heures, puis il est soumis à une atmosphère d'argon et chauffé à 180°C pendant 20 min, puis à 150°C sous agitation, la durée totale de l'étape de chauffage étant de 48 h.

Le produit obtenu répond à la formule :

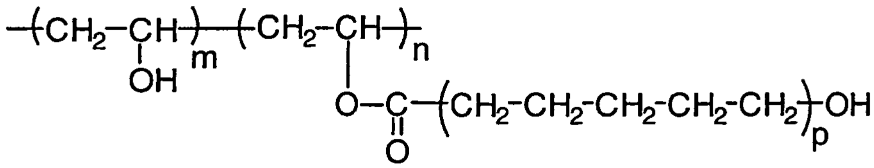

Plusieurs échantillons ont été préparés en faisant varier les quantités de réactifs et les conditions de réaction. Le résultat est indiqué dans le tableau II ci-dessous. Le degré de polymérisation DP et le taux de substitution DS sont prédéterminés. Les quantités des réactifs sont calculées par rapport à l'unité monomère, en fonction du degré de polymérisation et du taux de OH greffés souhaités. Par exemple, pour l'échantillon n°1,
$DP = \varepsilon CL/2xCaH_2$, c'est-à-dire 1,68/2x0,054
$DS = 2xCaH_2/PVA$, c'est-à-dire 2x0,054x1,85.

Tableau II

| | PVA (mmol) | ε-CL (mmol) | $CaH_2$ (mmol) | DP | DS | DSC Tg(°C) | DSC Tf(°C) | Rendt. Molaire % |
|---|---|---|---|---|---|---|---|---|
| 1 | 1,85 | 1,68 | 0,054 | 16 | 6 | -30 | - | 8 |
| 2 | 0,92 | 1,68 | 0,027 | 31 | 6 | -35 | - | 35 |
| 3 | 1,05 | 1,68 | 0,207 | 4 | 40 | -32 | - | 77 |
| 4 | 8,02 | 7,98 | 0,207 | 20 | 5 | -30 | - | 50 |
| 5 | 1,85 | 13,89 | 0,062 | 112 | 7 | -40 | 60 | 60 |
| 6 | 3,15 | 13,89 | 0,207 | 34 | 13 | -50 | 54 | 69 |
| 7 | 10,60 | 13,89 | 0,240 | 58 | 4,5 | -28 | - | 50 |

Les résultats montrent que dans tous les cas, le greffage de chaînes poly(lactone) a eu lieu. Le faible rendement de l'échantillon 1 est dû à la valeur élevée du rapport molaire PVA/lactone. Pour obtenir un rendement entre 50 et 80%, il est préférable d'utiliser un rapport ε-CL/PVA supérieur à 1,5.

La figure 15 représente le spectre RMN-$^1$H. La quantité de ε-Cl étant plus élevée que celle du PVA, les signaux

correspondants à PVA sont difficiles à identifier par $^{1}H$ RMN. Le spectre montre un faible signal à 5,2 ppm corrélé au CH du PVA de jonction dans le copolymère PVA-g-PCL.

La figure 16 représente le spectre IR du copolymère obtenu. Elle permet d'identifier les fonctions caractéristiques du copolymère :

- les fonctions esters à 1727 $cm^{-1}$ ;
- les fonctions alcools dont l'absorption maximale est située à 3444 $cm^{-1}$ ;
- les liaisons C-O à 1220 et 1097 $cm^{-1}$.

Les thermogrammes obtenus par DSC montrent la présence d'une seule température de transition vitreuse.

**Exemple 6**

**Préparation d'un copolymère PLLA-b-PEG-b-PLLA**

Un copolymère PLLA-b-PEG-b-PLLA a été préparé dans les conditions de l'exemple 1, en remplaçant $MgH_2$ par $CaH_2$. Il est obtenu avec un rendement de 70%, sous forme de précipité.

Du chromatogramme GPC et du spectre RMN-$^{1}H$, on déduit les caractéristiques suivantes :

Mn(théorique) = 16 400, Mn(RMN) = 15 600, Mn(GPC) = 13 200, Ip = 1,15.

**Exemple 7**

**Préparation d'un copolymère PCL-b-PEG-b-PCL**

Un copolymère PCL-b-PEG-b-PCL a été préparé dans les conditions de l'exemple 2, en remplaçant $MgH_2$ par $CaH_2$. Il est obtenu avec un rendement de 80%, sous forme de précipité.

Du chromatogramme GPC et du spectre RMN-$^{1}H$, on déduit les caractéristiques suivantes :

Mn (théorique) = 13 400, Mn(RMN) = 14 000, Mn(GPC) = 11 500, Ip = 1,14.

**Exemple 8**

**Préparation d'un copolymère PBL-b-PEG-b-PBL**

Un copolymère PBL-b-PEG-b-PBL a été préparé dans les conditions de l'exemple 3, en remplaçant $MgH_2$ par $CaH_2$, et en utilisant 6,9 mmol de β-butyrolactone au lieu de 13,8 mmol. Il est obtenu avec un rendement de 50%, sous forme de précipité.

Du chromatogramme GPC et du spectre RMN-$^{1}H$, on déduit les caractéristiques suivantes :

Mn(théorique) = 10 600, Mn(RMN) = 7 500, Mn(GPC) = 6 500, Ip = 1,25.

**Exemple 9**

**Préparation d'un copolymère PVA-g-PLLA**

Un copolymère PVA-g-PLLA a été préparé selon le mode opératoire de l'exemple 4, en utilisant un PVA ayant une Mn entre 13 000 et 23 000, et l'hydrure $MgH_2$.

Divers échantillons ont été préparés. Les conditions particulières de préparation et les caractéristiques des échantillons sont données dans le tableau III ci-dessous.

**Tableau III**

| PVA (mmol) | (L)-LA (mmol) | $MgH_2$ (mmol) | DP | DS | DSC Tg(°C) | Rendt molaire % |
|---|---|---|---|---|---|---|
| 11,36 | 25 | 2 | 6,25 | 17,5 | 40 | 60 |
| 11,36 | 34,7 | 2 | 8, 7 | 17,5 | 40 | 67 |
| 11,36 | 69 | 2 | 17,5 | 17,5 | 44 | 70 |

(suite)

| PVA (mmol) | (L)-LA (mmol) | $MgH_2$ (mmol) | DP | DS | DSC Tg(°C) | Rendt molaire % |
|---|---|---|---|---|---|---|
| 11,36 | 104 | 2 | 26 | 17,5 | 47 | 70 |
| 11,36 | 138 | 2 | 34,5 | 17,5 | 44 | 80 |
| 11,36 | 208 | 2 | 52 | 17,5 | 50 | 85 |

**Exemple 10**

**Préparation d'un copolymère PVA-g-PCL**

Un copolymère PVA-g-PCL a été préparé selon le mode opératoire de l'exemple 5, en utilisant un PVA ayant une Mn entre 13 000 et 23 000, et l'hydrure $MgH_2$.

Divers échantillons ont été préparés. Les conditions particulières de préparation et les caractéristiques des échantillons sont données dans le tableau IV ci-dessous.

Tableau IV

| PVA (mmol) | ε-CL (mmol) | $MgH_2$ (mmol) | DP | DS | DSC Tg(°C) | Rendt. molaire % |
|---|---|---|---|---|---|---|
| 11,36 | 4,4 | 0,2 | 11 | 17,5 | 40 | 15 |
| 11,36 | 8,8 | 0,2 | 21 | 17,5 | 40 | 25 |
| 11,36 | 13,2 | 0,2 | 33 | 17,5 | 44 | 36 |
| 11,36 | 17,5 | 0,2 | 44 | 17,5 | 47 | 50 |
| 11,36 | 26,3 | 0,2 | 66 | 17,5 | 44 | 50 |
| 11,36 | 35,1 | 0,2 | 88 | 17,5 | 50 | 60 |

**Exemple 11**

**Mise en évidence de la stéréorégularité des copolymères selon l'invention**

Des expériences ont été effectuées pour montrer que la polymérisation du L-Lactidé sous atmosphère d'argon à partir de macroamorceurs (PEG et PVA mis en présence de $CaH_2$ ou $MgH_2$) se produit sans isomérisation.

Mode opératoire

Plusieurs expériences ont été réalisées avec des PEG de masses molaires 2000 et 10000, des PVA de masses molaires moyennes en poids Mw = 13000-23000, 31000-50000 et 146000-186000 et différents rapports L-Lactide / EO unités PEG et L-Lactide / unités PVA conduisant à des enchaînements PLLA de différents degrés de polymérisation.

La RMN $^{13}C$ à 400 MHz est la seule technique permettant de montrer la présence d'un seul type d'enchaînement, par identification des signaux CO et CH de PLLA. Les signaux CO et CH de la chaîne poly L-lactide sont situés respectivement à 169,56 et 69,04 ppm, les signaux relatifs aux séquences hétérotactiques D-L sont situés à 169,25-169,50 et 69,40 ppm.

Le tableau V regroupe les expériences effectuées et fait apparaître les numéros de figures des spectres RMN $^{13}C$ à 400 MHz correspondant à chaque expérience.

Les expériences a) et g) ont été effectuées à titre comparatif, en utilisant les conditions opératoires du procédé de l'art antérieur précité [Rashkov et al., (Macromolecules, 1996, 29, pp.57-62)], désigné ci-après par « procédé Rashkov ».

Les masses molaires Mn théoriques sont obtenues à partir de la formule :

$$Mn = Mw + (Mw / 44) \times DS \times 72 \times DP$$

dans laquelle :

$M_w$ = masse molaire moyenne du PVA commercial soit environ 18000 (PVA 13000-23000), 35000 (PVA 21000-51000) et 155000 (PVA 146000-186000)
Masse molaire de l'unité monomère du PVA = 44
Masse molaire de l'unité monomère lactide = 72
DS taux de substitution
DP degré de polymérisation

**Tableau V**

| L-La/EO | L-La/unité PVA | Conditions Expérimentales | Masse molaire Moyenne Mn | n°Figure |
|---|---|---|---|---|
| **a)**<br>2/$PEG_{2000}$ | | 140°C<br>4 jours<br>$CaH_2$ sous vide | 7950 | 17 |
| **b)**<br>8,8/$PEG_{10000}$ | | 120°C<br>16 h<br>$MgH_2$, argon | 26900 | 18 |
| **c)**<br>2/$PEG_{2000}$ | | 105°C<br>12 h<br>$MgH_2$, argon | 9100 | 19 |
| **d)**<br>4,6/$PEG_{2000}$ | | 120 °C<br>16 h<br>$MgH_2$, argon | 15300 | 20 |
| **e)**<br>1/($PEG_{2000}$ | | 120°C<br>12 h<br>$MgH_2$, argon | 33000 | 21 |
| **f)**<br>5/$PEG_{10000}$ | | 120 °C<br>20 h<br>$MgH_2$, argon | 76000 | 22 |
| | **g)**<br>6/$PVA_{18000}$ | 140°C<br>4 jours<br>$CaH_2$ sous vide | 360000<br>théorique | 23 et<br>24 |
| | **h)**<br>6/$PVA_{35000}$ | 120°C<br>24 h<br>$MgH_2$, argon | 660000<br>théorique | 25 |
| | **i)**<br>2,6/$PVA_{155000}$ | 120°C<br>48 h<br>$MgH_2$, argon | 1700000<br>théorique | 26 |

Résultats

Les figures 18 à 22 présentent les spectres obtenus en mettant en oeuvre le procédé selon l'invention, le prépolymère utilisé étant le poly(éthylène) glycol. Les figures 25 et 26 présentent les spectres obtenus en mettant en oeuvre le procédé selon l'invention, le prépolymère utilisé étant le PVA.

Sur la figure 18, les signaux CO et CH de la chaîne PLLA sont situés respectivement à 169,55 et 68,97 ppm.

Sur les figures 19, 20 et 21, les seuls signaux présents sont situés respectivement à 169,58 et 68,99 ppm, 169,62 et 69,03 ppm, 169,61 et 69,02 ppm.

Sur la figure 22, seuls les signaux à 169,58 et 68,99 ppm apparaissent. La ligne de base de ce spectre est irrégulière (bruit de fond), ce qui est en bon accord avec la masse molaire élevée du copolymère (Mn = 76000). En effet, la solubilité de ce copolymère dans le solvant $CDCl_3$ nécessaire à la préparation de l'échantillon RMN est plus faible et la solution-échantillon obtenue est moins concentrée.

Ces spectres montrent donc l'absence de signaux relatifs aux séquences hétérotactiques D-L.

De même, les figures 25 et 26 ne font apparaître aucun des signaux caractéristiques des séquences hétérotactiques.

Il est à noter que des résultats similaires ont été obtenus en utilisant l'hydrure de calcium $CaH_2$, à la place de l'hydrure de magnésium $MgH_2$.

A titre comparatif, à partir du spectre obtenu au cours de l'expérience a) (présenté sur la figure 17), le rapport des aires des signaux permet d'évaluer à 15-20 % le nombre de séquences hétérotactiques dans les copolymères obtenus par le procédé Rashkov.

De même, sur les Figures 23 et 24, il apparaît que Les signaux de l'enchaînement PLLA sont à 175,08 ppm (CO bout de chaîne), 169,59 ppm (CO chaîne), 65,83 (CH bout de chaîne), 68,99 (CH chaîne), 16,62 et 20,03 ppm ($CH_3$). Les signaux de l'enchaînement PVA sont à 67,94 ppm (CH greffé), 66,69 ppm (CH non greffé) et 39 ppm ($CH_2$ signal très peu intense).

Les spectres élargis de la Figure 24 montrent les signaux des séquences hétérotactiques à 169,15-169,45 ppm et 69,42 ppm.

Il est à noter que le procédé Rashkov décrit uniquement la synthèse de PLLA-PEG-PLLA et qu'il ne conduit à des enchaînements stéréoréguliers que pour des masses molaires inférieures à 4000 (Macromolecules 1996, 29, page 51, tableau 1, figure 1). Les copolymères de masses molaires supérieures à 4000 et inférieures à 58000 présentent des séquences non stéréorégulières D-L (Macromolecules 1996, 29, page 58). Le cas de masses molaires supérieures à 58000 (tableau 1 page 58) n'est pas décrit.

Conclusion

La stéréorégularité de l'enchaînement des copolymères triblocs PLLA-b-PEG-b-PLLA et greffés PVA-g-PLLA est observée pour une large gamme de masses molaires.

Les conditions plus douces utilisées dans le procédé selon l'invention (température et temps de polymérisation plus faibles, atmosphère d'argon) par rapport au procédé Rashkov sont à l'origine de cette stéréorégularité.

**Exemple 12**

**Etude de la dégradation du PVA**

Le PVA étant très sensible à la température, sa dégradation, même minime, se traduit par une coloration brunâtre.

Des expériences ont été effectuées pour montrer que, par rapport au procédé selon l'invention, la dégradation du PVA est plus importante lorsque le procédé Rashkov est mis en oeuvre. Ces expériences ont également pour but de montrer que, à température plus basse, la dégradation est limitée par la présence de monomère et de l'hydrure dans le milieu réactionnel.

Un PVA de masse molaire élevée, Mw = 155000 (température de fusion élevée, longue chaîne) a été choisi pour ces expériences, afin de favoriser les ruptures de chaîne et les modifications de groupements fonctionnels. Les exemples ont été réalisés en utilisant le lactide L-La, mais les résultats peuvent être étendus à la ε-caprolactone et la β-butyrolactone.

Milieu réactionnel

Un mélange PVA (2 g, 45 mmol unités monomères) / L-La (10 g, 138 mmol unités monomères) est chauffé en utilisant les conditions suivantes :

- soit des conditions correspondant au procédé de l'invention : 105°C pendant 14 heures sous atmosphère d'argon ;
- soit les conditions du procédé Rashkov identiques à celles utilisées avec le PEG dans la publication précitée : 140°C pendant 4 jours sous vide.

Dans les deux cas, le PVA est ensuite récupéré, séparé du L-La et caractérisé.

Il est à noter qu'on n'incorpore pas d'hydrure dans le mélange, car le but n'est pas de préparer le copolymère mais de comparer l'influence des conditions opératoires sur la mise en réaction et la structure du PVA. La dégradation qui affecte la chaîne PVA affectera de façon similaire l'enchaînement PVA dans le copolymère PVA-g-PLLA.

Récupération du PVA après 14 heures (PVA 14h) et après 4 jours (PVA 4j)

Le solide brut obtenu est légèrement coloré jaune après 14 heures (PVA 14h) et fortement coloré marron après

4 jours (PVA 4j). Le solide brut est extrait 3 fois dans le chloroforme à ébullition pour éliminer le L-lactide soluble dans le chloroforme. Il peut éventuellement se former de faibles quantités de poly(L-lactide) par polycondensation. Cet homopolymère est soluble dans le chloroforme et sera également éliminé.

Le solide après extraction est séché et pesé. Une masse de PVA légèrement inférieure à 2 g est récupérée dans chaque cas.

Caractérisation par viscosimétrie des solutions diluées

Cette méthode permet de déterminer la masse molaire moyenne viscosimétrique $M_v$ en mesurant le temps d'écoulement d'une solution diluée de polymère dans un capillaire. Le tube viscosimétrique de Hubbelhode est utilisé.

La viscosité réduite $\eta_{réd}$ est déterminée à partir des temps d'écoulement selon la formule :

$$\eta_{réd} = t-t_0 / t_0 C$$

dans laquelle :

$t_0$ = temps d'écoulement de l'eau ;
t = temps d'écoulement de la solution de polymère ;
C = concentration.

La viscosité intrinsèque [η] est déterminée à partir de la relation de Huggins :

$$\eta_{réd} = [\eta] + k [\eta]^2 C$$

avec k = constante de Huggins.

Pour les solutions aqueuses de PVA, on considère généralement que $\eta_{réd}$ varie peu avec la concentration. On peut donc confondre $\eta_{réd}$ et [η].

La masse viscosimétrique est ensuite déduite de la relation de Mark-Houwink :

$$[\eta] = K M_v^{\,a}$$

dans laquelle les constantes de Mark-Houwink sont K = 2 $10^{-2}$ unités CGS et a = 0,76 à 25°C.

Le tableau VI rassemble les résultats obtenus et montre la comparaison avec les caractéristiques de deux PVA commerciaux de masses molaires respectives 155000 g/mol et 35000 g/mol, qui n'ont pas subi de chauffage.

Le temps d'écoulement $t_0$ de l'eau, solvant de référence, est 83,9 s.

**Tableau VI**

| | PVA 155000 | PVA 35000 | PVA 14h | PVA 4j |
|---|---|---|---|---|
| Concentration | 0,5g/100ml | 0,5g/100ml | 0,5g/100ml | insoluble |
| Temps d'écoulement (s) | 136,1±0,2 | 102,6±0,2 | 129,3±0,2 | - |
| Viscosité intrinsèque [η] (ml/g) | 96,75 | 40,24 | 86,50 | - |
| Masse molaire $M_v$ | 67000 | 21000 | 62000 | - |

Le PVA 4j est insoluble dans l'eau, sa masse molaire n'a pas pu être déterminée. Cette insolubilité peut être associée à de profonds changements dans la structure de PVA chauffé à 140°C, notamment à la réticulation des chaînes.

Les valeurs de $M_v$ obtenues sont différentes des valeurs Mw du PVA commercial. Cette différence est normale puisqu'il s'agit de méthodes différentes de détermination des masses. Le rapport entre $M_v$ et Mw est cependant respecté.

Caractérisation par Analyse Enthalpique Différentielle DSC

Cette analyse a été réalisée sur PVA 14h, PVA 4j, mais également sur un PVA commercial et sur des mélanges PVA/L-LA et PVA/L-La/$MgH_2$ qui n'ont pas subi de chauffage. Les températures de transition vitreuse Tg et de fusion

Tf enregistrées après deux montées en température à 10°C/min sont rassemblées dans le tableau VII. Ce tableau indique également les numéros de figure correspondant à chaque expérience.

**Tableau VII**

| T °C | PVA | PVA 14h | PVA 4j | mélange PVA+L-La | mélange PVA+L-La + $MgH_2$ |
|---|---|---|---|---|---|
| Tg-1ère montée | - | 75 | 135 | - | - |
| Tg-2ème montée | 75 | | | - | |
| Tf-1ère montée | 228 | 210 | 222 | 1 seule montée 100(L-La) | 1 seule montée 100 (L-La) |
| Tf-2ème montée | 220 | 228 | décomposition | 202(PVA) | 225 (PVA) Pic<110°C |
| N°Figure | 27a et 27b | 28a et 28b | 29a et 29b | 30a | 30b |

Les thermogrammes de PVA et PVA 14h (Figures 27a, b et 28a, b) sont comparables, ce qui signifie que les propriétés thermiques du PVA sont conservées même après 14 heures à 105°C. Par contre, d'importantes modifications des propriétés thermiques apparaissent dans le cas de PVA 4j (Fig 29a, b) : forte augmentation de Tg (1ère montée), absence de fusion et décomposition du polymère à partir de 250°C (2ème montée). Les indices a et b des figures 27, 28 et 29 correspondent respectivement à la première et à la deuxième montée.

Le thermogramme de la Figure 30a a été réalisé après mélange de PVA (10 mg, 0,22 mmol) et de L-La (60 mg, 1,1 mmol) finement broyés. La zone de fusion du polymère dans le mélange commence à 150°C, avec une valeur maximale à 202°C, inférieure à celle du PVA (Tf = 228°C 1ère montée). On peut en conclure que l'addition de L-La au PVA diminue la température de fusion du polymère d'environ 50 °C.

Le thermogramme de la Figure 30b a été réalisé après addition de $MgH_2$ dans le mélange PVA/L-La précédent. On note l'apparition d'un pic exothermique à partir de 105°C qui correspond au démarrage de la réaction de copolymérisation. L'aire du pic endothermique correspondant à la fusion du PVA est réduite et témoigne de la disparition du PVA.

Il est important de noter que la réaction de copolymérisation commence à une température nettement inférieure à la température de fusion du PVA.

Caractérisation par Analyse Thermogravimétrique ATG

Cette analyse a été réalisée sur du PVA, du PVA 14h, du PVA 4j, ainsi que sur du PVA à température constante de 105°C et 140°C. Les thermogrammes de PVA à température constante 105°C et 140°C ont été enregistrés pendant 60 minutes sous azote. Le polymère a été au préalable soigneusement broyé et séché sous vide à température ambiante pendant 4 heures pour éviter une éventuelle perte d'eau résiduelle dans le polymère.

Le tableau VIII regroupe les résultats obtenus, et indique les numéros de figure correspondant à chaque expérience.

**Tableau VIII**

| T°C | Isotherme PVA 105°C | Isotherme PVA 140°C | PVA | PVA 14h | PVA 4j |
|---|---|---|---|---|---|
| Td début | | | 100 | 100 | 80 |
| Td 5% | | | 220 | 220 | 115 |
| Td max | | | 280 | 280 | 225 |
| % perte | 2,6 | 4,5 | | | |
| n°Figure | 31a | 31b | 32a | 32b | 32c |

Les thermogrammes montrent que le pourcentage de perte en poids est plus élevé à 140°C (4,5 %) qu'à 105°C (2,6 %) (Tableau VIII et Figures 31a, b).

Les thermogrammes de PVA et PVA 14h sous air et sous azote sont semblables (Figures 32a, b) et nettement différents du thermogramme de PVA 4j. La température de début de dégradation (Td) diminue de 100°C à 80°C, la température correspondant à la perte de 5% en poids (Td 5%) diminue plus fortement de 220°C à 115°C. La température correspondant à la vitesse maximale de perte diminue également de 280°C à 225°C (figure 32c).

Caractérisation par analyse UV-Visible

La spectrophotométrie UV-Vis des poudres des polymères (Figure 33) montre que le PVA absorbe dans une zone étroite de longueur d'onde autour de 300 nm alors que le PVA 14h présente une zone plus étendue de 200 nm à 400 nm. Le décalage de la zone d'absorption est en accord avec la coloration légèrement jaune du solide.

L'absorption du PVA 4j est nettement plus intense et témoigne d'une importante modification de structure du PVA Elle s'étend de 200 nm à 700 nm et peut être attribuée à des groupements fonctionnels insaturés fortement conjugués obtenus par modification thermique et chimique des groupements des hydroxyles du PVA.

Caractérisation par analyse IR-ATR

La spectroscopie IR en mode ATR (Réflexion Totale Atténuée) des polymères sous forme de poudre permet une analyse jusqu'à une profondeur de 2 à 5 $\mu$m. Le spectre du PVA (Fig 34a) présente les bandes caractéristiques $\nu_{O-H}$ de 3050 à 3450 $cm^{-1}$ et $\nu_{c-c}$ et $\nu_{c-o}$ de 1100 à 1300 $cm^{-1}$.

Le PVA 14h (Fig 34b) présente un spectre similaire, on note cependant l'apparition de bandes de faible intensité dans la région 750-900 $cm^{-1}$.

Ces bandes sont beaucoup plus intenses dans le spectre de PVA 4j (Fig 35a). Elles sont plus nettement mises en évidence sur la figure 35b où apparaissent seulement les bandes relatives aux groupements fonctionnels introduits à la suite du chauffage à 140°C pendant 4 jours (différence PVA 4j - PVA). Ces bandes sont attribuables aux déformations des liaisons C-H dans les structures carbonées insaturées, aromatiques ou fortement conjuguées résultant de la réticulation des chaînes PVA.

Conclusion

**1. PVA**

La dégradation du PVA est plus importante à 140°C qu'à 105°C. La différence est visible même au bout d'une heure de chauffage (DSC).

**2. PVA-L-La**

La présence de L-La diminue la température de fusion du PVA d'environ 50°C (DSC).

Sans $MgH_2$, les fonctions hydroxyles du PVA ne réagissent pas et le polymère n'est pas consommé. Sa dégradation est beaucoup plus importante à 140°C pendant 4 jours sous vide qu'à 105°C pendant 14 heures sous argon (d'après les paramètres suivants : couleur, solubilité, Mv, DSC, ATG, IR et UV).

En présence de $MgH_2$ à environ 105°C, le PVA gonfle puis se dilue dans le L-La fondu. Il n'existe donc plus sous forme solide (DSC). Le PVA réagit avec $MgH_2$ pour former le macroamorceur de type alcoolate de magnésium en solution dans le L-La, selon la réaction ci-dessous. La réaction de copolymérisation démarre dès que les premières fonctions alcoolate apparaissent à environ 105°C. Le L-La est consommé et PLLA est greffé sur PVA. En théorie, il n'est donc pas nécessaire de chauffer au-delà de cette température.

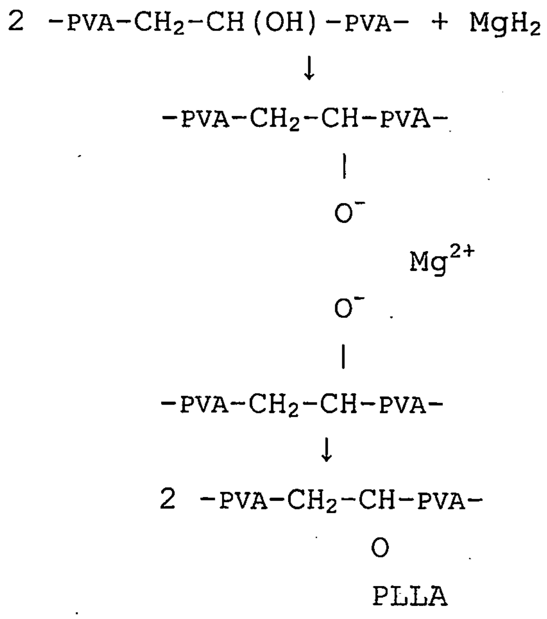

Comparaison avec le procédé Rashkov

Le PEG $-(CH_2-CH_2-O)-$ utilisé dans le procédé Rashkov et le PVA $-(CH_2-CH(OH))-$ utilisé dans les expériences décrites ci-dessus ont des structures et des comportements très différents. Le PEG est dihydroxylé alors que le PVA 155000 par exemple possède 155000/44 = 3522 groupements hydroxyles dans l'enchaînement.

La cohésion des molécules de PVA à l'état solide est due à un grand nombre d'interactions hydrogène, elle est beaucoup plus élevée que pour le PEG. La température de fusion est également plus élevée pour le PVA : $Tf_{PVA}$ = 225°C et $Tf_{PEG}$ = 60°C.

La dégradation des polymères hydroxylés est en grande partie due à des réactions de déhydroxylation conduisant à des liaisons insaturées. Par conséquent, la sensibilité du PVA à la dégradation thermique est beaucoup plus grande que celle du PEG.

D'autre part, le PEG fond à une température inférieure à celle de L-La (Tf = 96°C), ce qui rend la préparation du milieu réactionnel plus facile et ne présente pas de risque de dégradation.

**Revendications**

1. Procédé de préparation d'un copolymère à blocs ou en peigne comprenant au moins une partie hydrophile et au moins deux parties hydrophobes, par polymérisation anionique sans solvant d'un prépolymère choisi parmi un poly (éthylène glycol) et un alcool polyvinylique, et d'un monomère lactone ou dilactone, le copolymère comprenant un bloc PEG entre deux blocs poly(lactone) ou des unités récurrentes $-CH_2-CH(OH)-$ et des unités récurrentes $-CH_2-CH(OR)-$ dans lesquelles R représente une chaîne polylactone, le procédé étant mis en oeuvre en présence d'un hydrure de métal alcalino-terreux, **caractérisé en ce qu'**il est mis en oeuvre sous atmosphère inerte, l'étape de polymérisation n'étant pas effectuée sous vide.

2. Procédé selon la revendication 1, **caractérisé en ce que** l'hydrure est choisi parmi l'hydrure de calcium $CaH_2$ et l'hydrure de magnésium $MgH_2$.

3. Procédé selon la revendication 1, **caractérisé en ce que** le monomère est choisi parmi le L-lactide, le glycolide, la β-butyrolactone, la δ-valérolactone et la ε-caprolactone.

4. Procédé selon la revendication 1, **caractérisé en ce qu'**il est mis en oeuvre sous atmosphère d'argon ou sous atmosphère d'azote.

5. Procédé selon la revendication 1, **caractérisé en ce que** le prépolymère est le poly(éthylène glycol), et la polymérisation est effectuée à une température de 115°C à 125°C pendant une durée de 14 à 16 heures.

6. Procédé selon la revendication 1, **caractérisé en ce que** le prépolymère est l'alcool polyvinylique, et la polymérisation est effectuée à une température de 140°C à 150°C pendant une durée de 36 à 54 heures.

7. Procédé selon la revendication 1, **caractérisé en ce que** le copolymère comprend un bloc PEG entre deux blocs poly(lactone).

8. Procédé selon la revendication 7, **caractérisé en ce que** ledit copolymère est stéréorégulier.

9. Procédé selon la revendication 7 ou 8, **caractérisé en ce que** les unités des blocs poly(lactone) sont dérivées d'un monomère choisi parmi le L-lactide, le glycolide, la β-butyrolactone, la β-valérolactone et la ∊-caprolactone.

10. Copolymère pouvant être obtenu par un procédé selon la revendication 1, **caractérisé en ce qu'**il comprend des unités récurrentes -$CH_2$-CH(OH)- et des unités récurrentes -$CH_2$-CH(OR)- dans lesquelles R représente une chaîne polylactone.

11. Copolymère selon la revendication 10, **caractérisé en ce que** la chaîne polylactone est dérivée d'un monomère choisi parmi le L-lactide, le glycolide, la β-butyrolactone, la δ-valérolactone et la ∊-caprolactone.

## Claims

1. Process for preparing a block or comb copolymer comprising at least one hydrophilic portion and at least two hydrophobic portions by anionic solvent-free polymerization of a prepolymer selected from a polyethylene glycol and a polyvinyl alcohol, and of a lactone or dilactone monomer, said copolymer comprising a PEG block between two polylactone blocks or recurrent - $CH_2$-CH(OH)- units and recurrent -$CH_2$-CH(OR)- units in which R represents a polylactone chain, wherein the process is carried out in the presence of an alkaline-earth metal hydride, **characterized in that** it is carried out in an inert atmosphere, with the proviso that the polymerization step is not carried out under vacuum.

2. Process according to claim 1, **characterized in that** said alkaline-earth metal hydride is selected from calcium hydride $CaH_2$ and magnesium hydride $MgH_2$.

3. Process according to claim 1, **characterized in that** said lactone or dilactone monomer is selected from L-lactide, glycolide, β-butyrolactone, δ-valerolactone and ε-caprolactone.

4. Process according to claim 1, **characterized in that** said inert atmosphere is an argon atmosphere or is a nitrogen atmosphere.

5. Process according to claim 1, **characterized in that** the prepolymer is a polyethylene glycol, and polymerization is carried out at a temperature of 115°C to 125°C for a period of 14 to 16 hours.

6. Process according to claim 1, **characterized in that** the prepolymer is polyvinyl alcohol, and polymerization is carried out at a temperature of 140°C to 150°C for a period of 36 to 54 hours.

7. Process according to claim 1, **characterized in that** the copolymer comprises a PEG block between two polylactone blocks.

8. Process according to claim 7, **characterized in that** said copolymer is stereoregular.

9. Process according to claims 7 or 8, **characterized in that** the units of the polylactone blocks are derived from a monomer selected from L-lactide, glycolide, β-butyrolactone, δ-valerolactone and ε-caprolactone.

10. Copolymer obtainable by the process according to claim 1, **characterized in that** recurrent -$CH_2$-CH(OH)- units and recurrent -$CH_2$-CH(OR)- units in which R represents a polylactone chain.

11. Copolymer according to claim 10, **characterized in that** the polylactone chain is derived from a monomer selected from L-lactide, glycolide, β-butyrolactone, δ-valerolactone and ε-caprolactone.

**Patentansprüche**

1. Verfahren zur Herstellung eines block- oder kammartigen Copolymers umfassend wenigstens einen hydrophilen Teil and wenigstens zwei hydrophobe Teile, durch anionische Polymerisation ohne Lösungsmittel eines Prepolymers, das aus einem Glycol-Polyäthylen und einem Polyvinylalkohol und einem Lacton- oder Dilactonmonomer ausgewählt ist, wobei das Copolymer zwischen zwei Poly(Lacton)-Blöcken einen PEG-Block, oder wiederkehrenden $-CH_2-CH(OH)$-Einheiten und wiederkehrenden $-CH_2-CH$ (OR)-Einheiten umfasst, in welchen R eine Polylacton-Kette darstellt, wobei das Verfahren bei Vorliegen eines Hydrids aus Erdalkalimetals durchgeführt wird, **dadurch gekennzeichnet, dass** es unter inertatmosphäre ausgeführt wird, wobei die Polymerisationsstufe nicht unter Vakuum durchgeführt wird.

2. Verfahren nach Anspruch 1, **dadurch gekennzeichnet, dass** das Hydrid aus dem Calciumhydrid $CaH_2$ und dem Magnesiumhydrid $MgH_2$ ausgewählt ist.

3. Verfahren nach Anspruch 1, **dadurch gekennzeichnet, dass** das Monomer aus dem L-Lactid, dem Glycolid, dem β-Butyrolacton, dem δ-Valerolacton und dem ε-Caprolacton ausgewählt ist.

4. Verfahren nach Anspruch 1, **dadurch gekennzeichnet, dass** es unter Argonatmosphäre oder unter Stickstoffatmosphäre ausgeführt wird.

5. Verfahren nach Anspruch 1, **dadurch gekennzeichnet, dass** das Prepolymer das Polyethylenglycol ist und die Polymerisation bei einer Temperatur von 115°C bis 125°C über eine Zeitdauer von 14 bis 16 Stunden durchgeführt wird.

6. Verfahren nach Anspruch 1, **dadurch gekennzeichnet, dass** das Prepolymer das Polyvinylalkohol ist und die Polymerisation bei einer Temperatur von 140°C bis 150°C über eine Zeitdauer von 36 bis 54 Stunden durchgeführt wird.

7. Verfahren nach Anspruch 1, **dadurch gekennzeichnet, dass** das Copolymer zwischen zwei Poly(Lacton)-Blöcken einen PEG-Block umfasst.

8. Verfahren nach Anspruch 7, **dadurch gekennzeichnet, dass** das gesagte Copolymer stereoregelmässig ist.

9. Verfahren nach Anspruch 7 oder 8, **dadurch gekennzeichnet, dass** die Einheiten der Poly(Lacton)-Blöcke aus einem Monomer abgeleitet ist, das aus dem L-Lactid, dem Glycolid, dem β-Butyrolacton, dem δ-Valerolacton und dem ε-Caprolacton ausgewählt ist.

10. Copolymer, das nach einem Verfahren gemäß Anspruch 1 erhalten werden kann, **dadurch gekennzeichnet, dass** es wiederkehrende Einheiten $-CH_2-CH(OH)-$ und wiederkehrende Einheiten $-CH_2-CH(OR)-$ umfasst, in welchen R eine Polylacton-Kette darstellt.

11. Copolymer nach Anspruch 10, **dadurch gekennzeichnet, dass** die Polylacton-Kette aus einem Monomer abgeleitet ist, das aus dem L-Lactid, dem Glycolid, dem β-Butyrolacton, dem δ-Valerolacton und dem ε-Caprolacton ausgewählt ist.

Figure 1

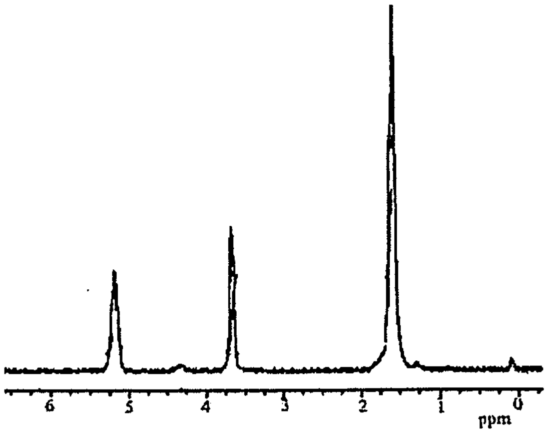


Fig. 2

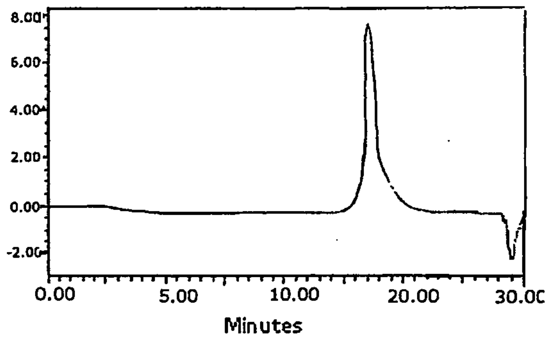


Fig. 3

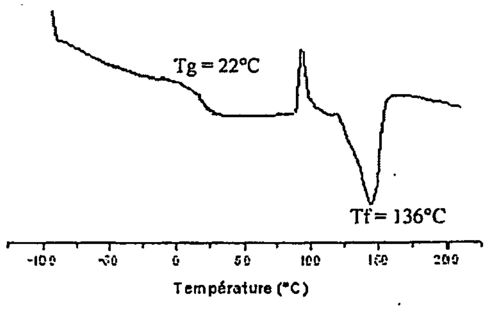

Fig. 4

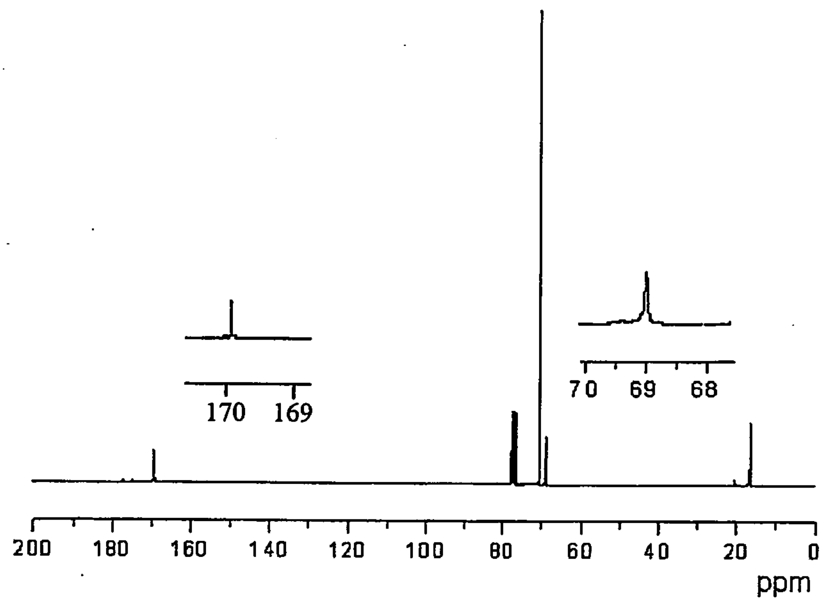
170
169
70
69
68
200
180
160
140
120
100
80
60
40
20
0
ppm

Fig. 5

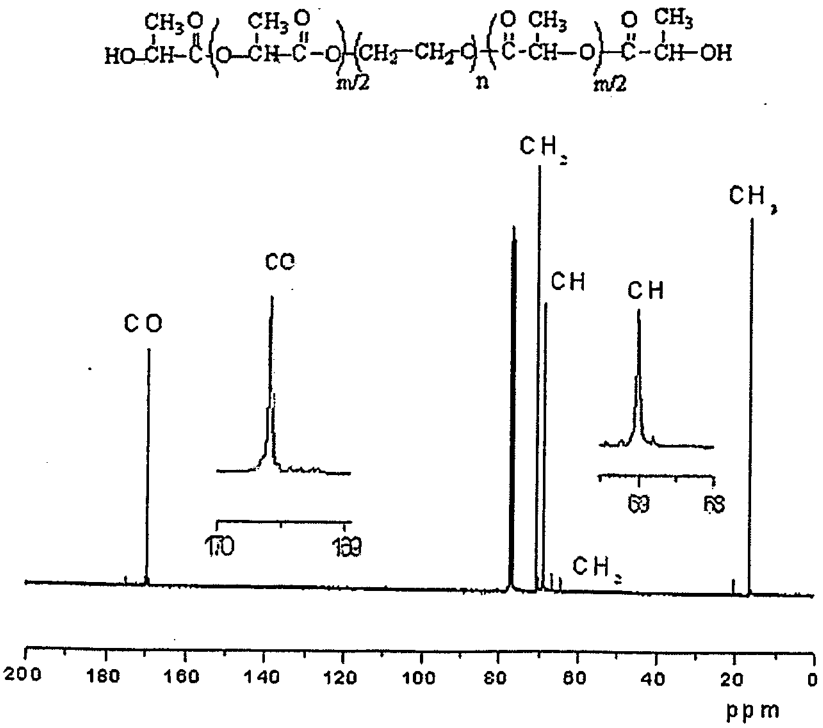
CH2
CH3
CO
CO
CH
CH
170
169
69
68
CH2
200
180
160
140
120
100
80
60
40
20
0
ppm

Fig. 6

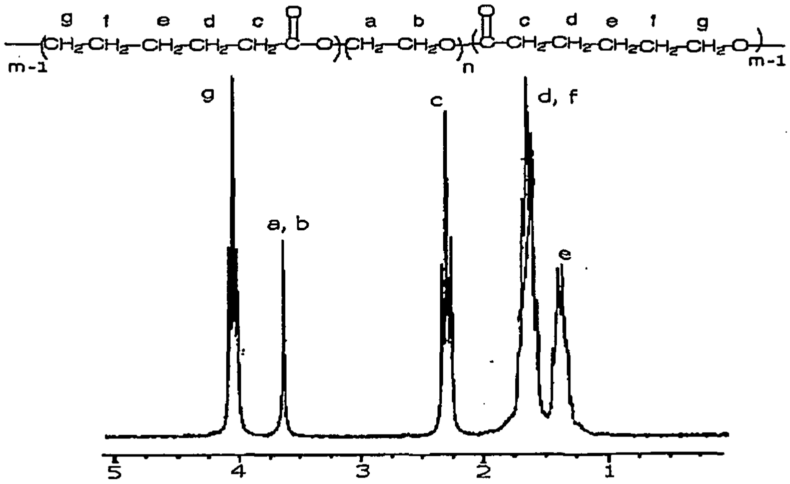


Fig. 7

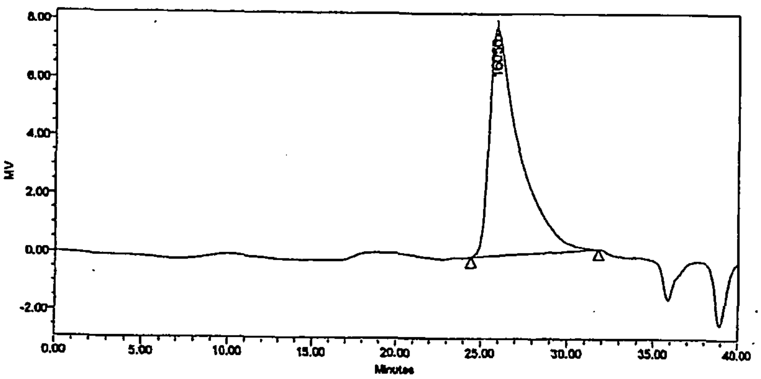


Fig. 8

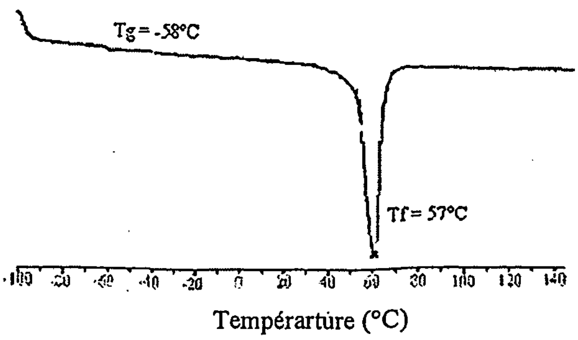

Fig. 9

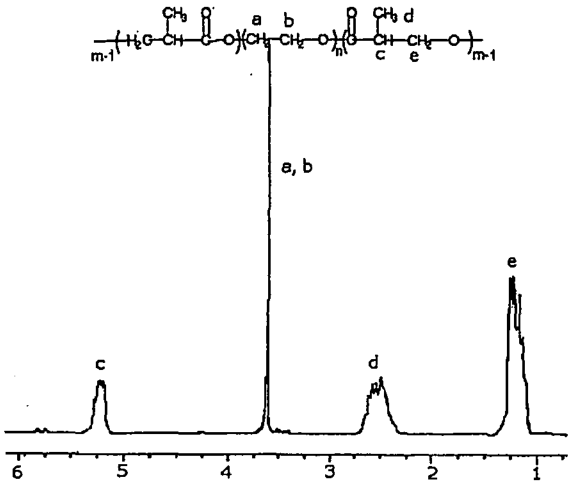

Fig. 10

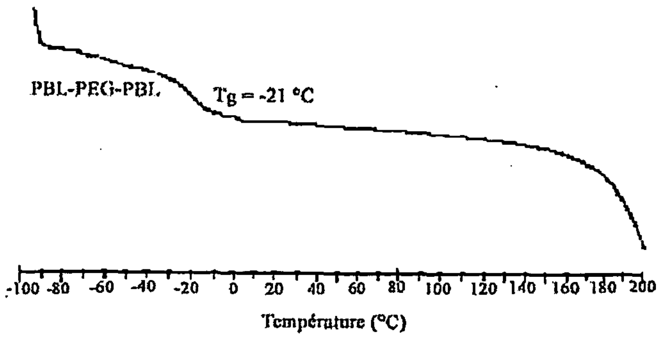


Fig. 11

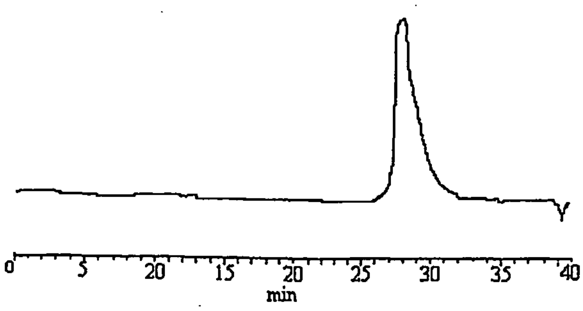

Fig. 12

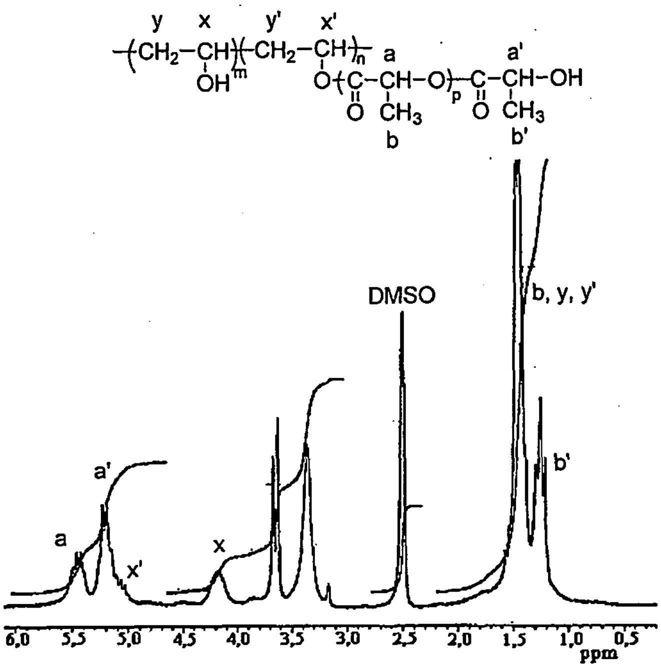
DMSO
b, y, y'
a'
a
x
x'
b'
6,0 5,5 5,0 4,5 4,0 3,5 3,0 2,5 2,0 1,5 1,0 0,5
ppm

Fig. 13

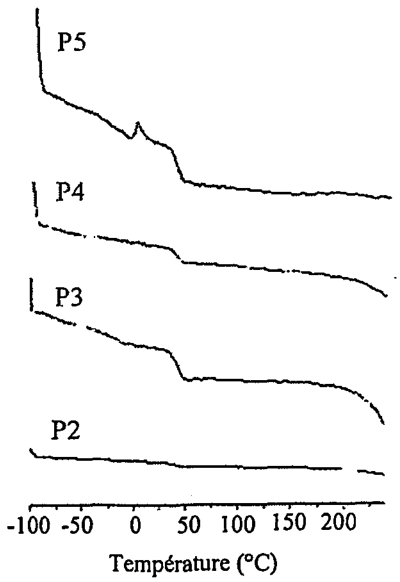
P5
P4
P3
P2
-100 -50 0 50 100 150 200
Température (°C)

Fig. 14

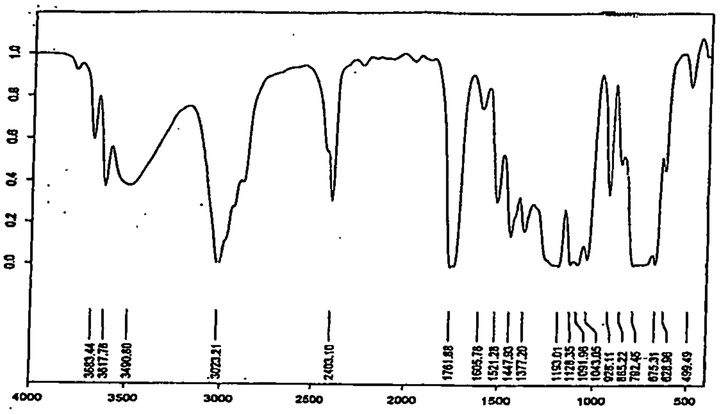
0.0
0.2
0.4
0.6
0.8
1.0
4000
3500
3000
2500
2000
1500
1000
500

Fig. 15

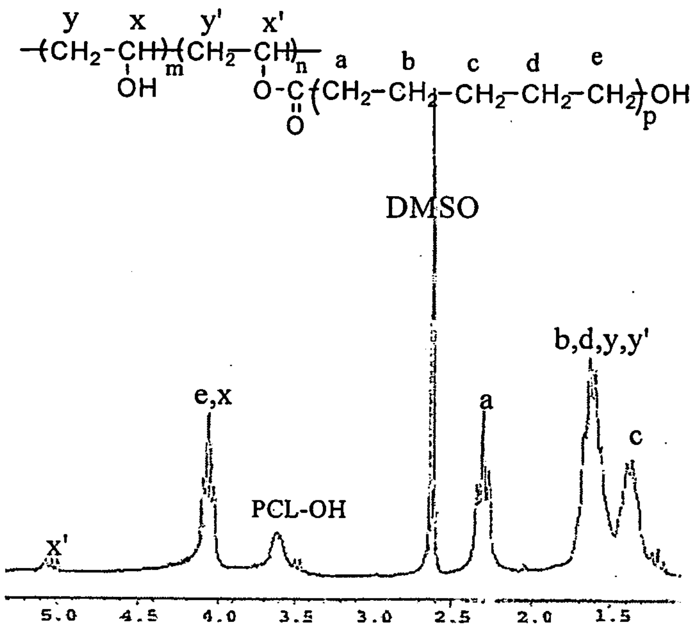
DMSO
b,d,y,y'
e,x
a
c
PCL-OH
x'
5.0
4.5
4.0
3.5
3.0
2.5
2.0
1.5

Fig. 16

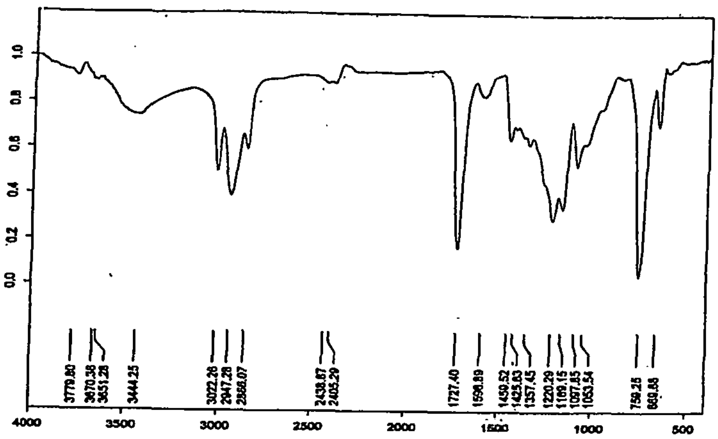

Fig.17

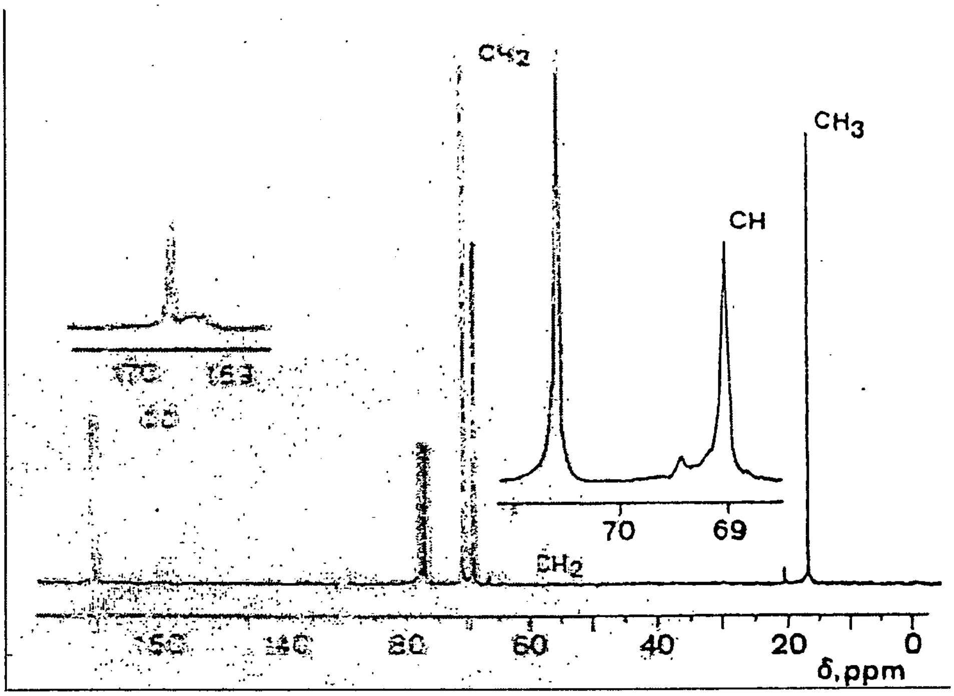


Fig.18a

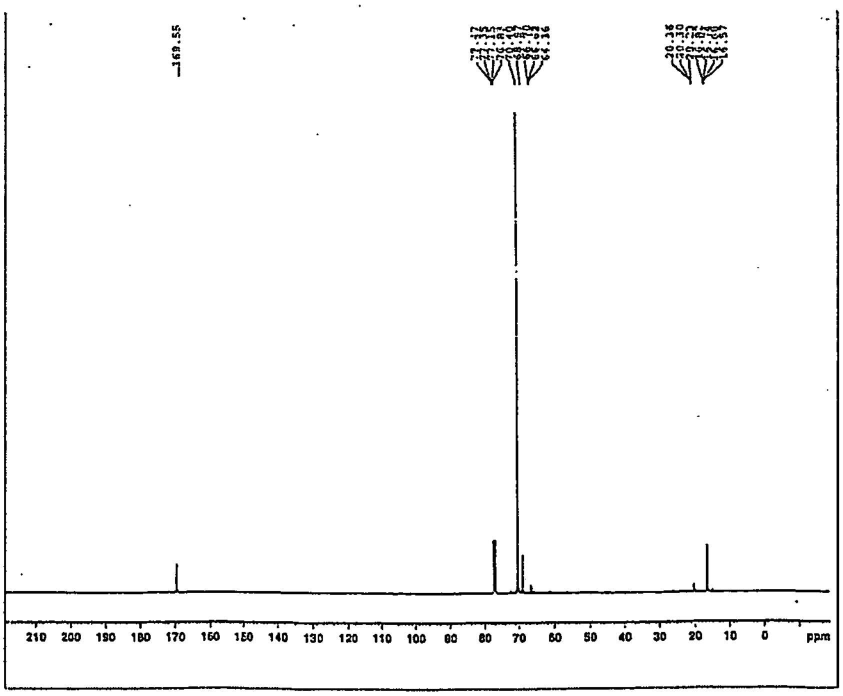

Fig.18b

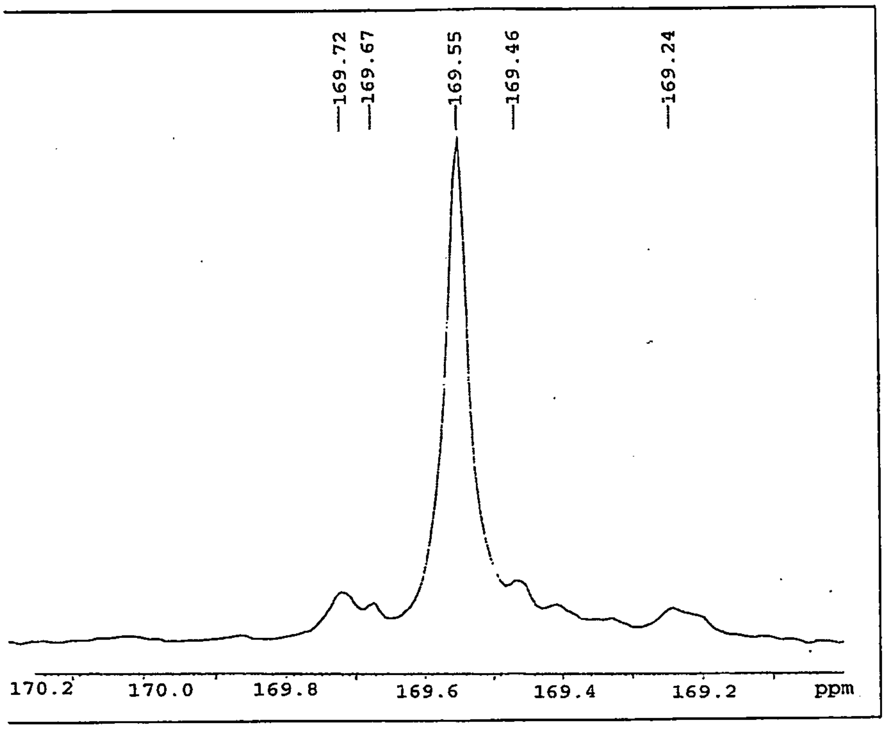


Fig.18c

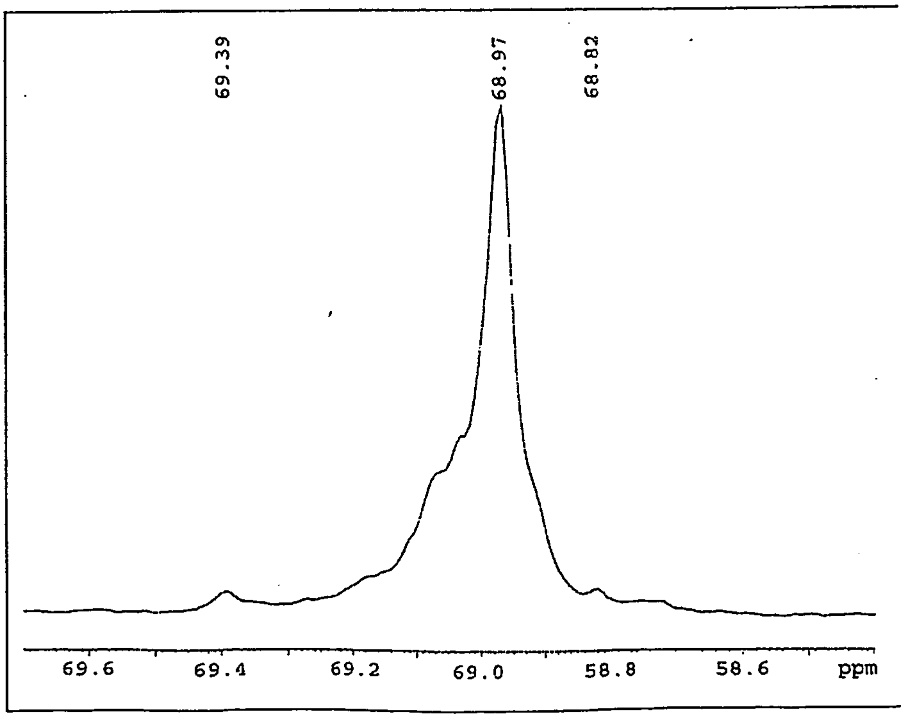

Fig.19a

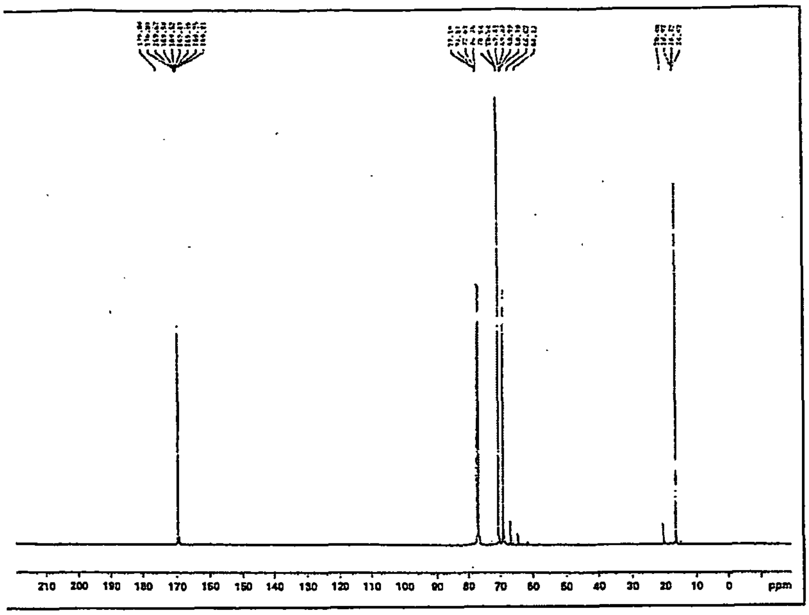


Fig.19b

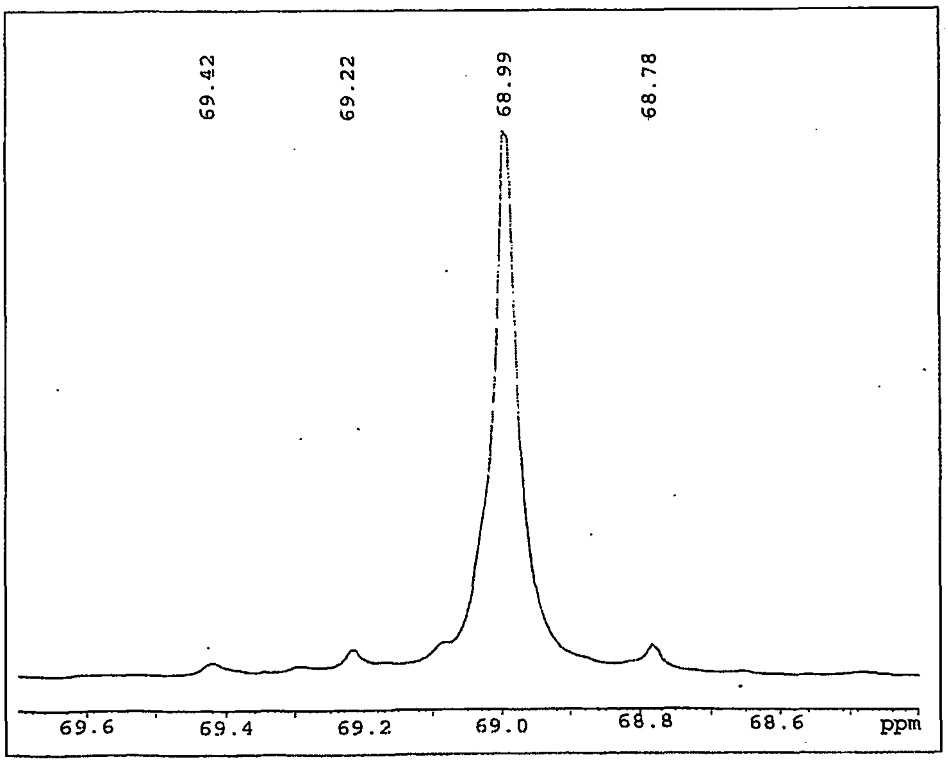

Fig.19c

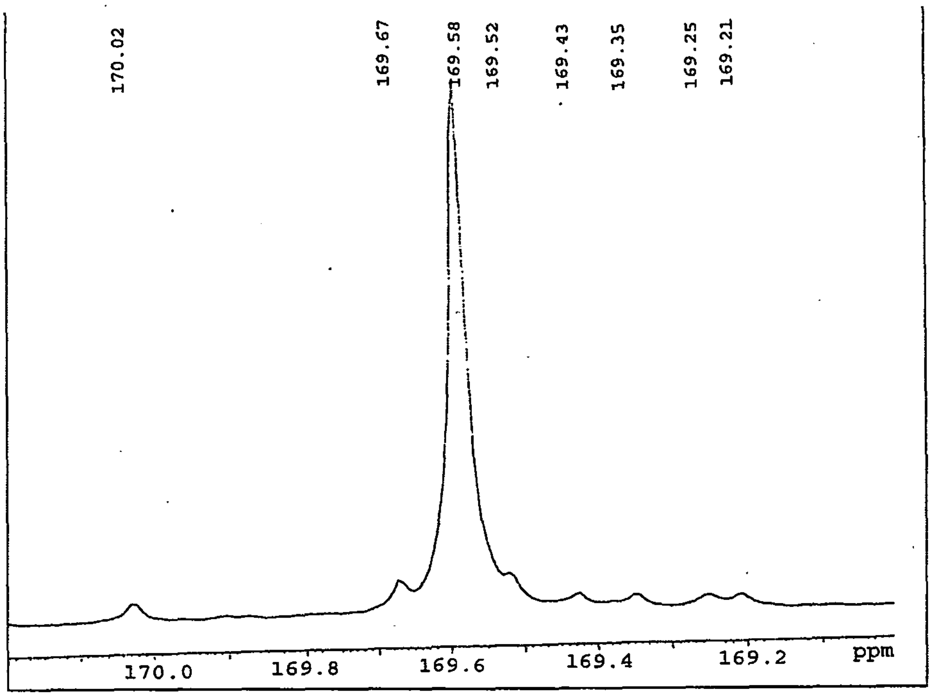


Fig.20a

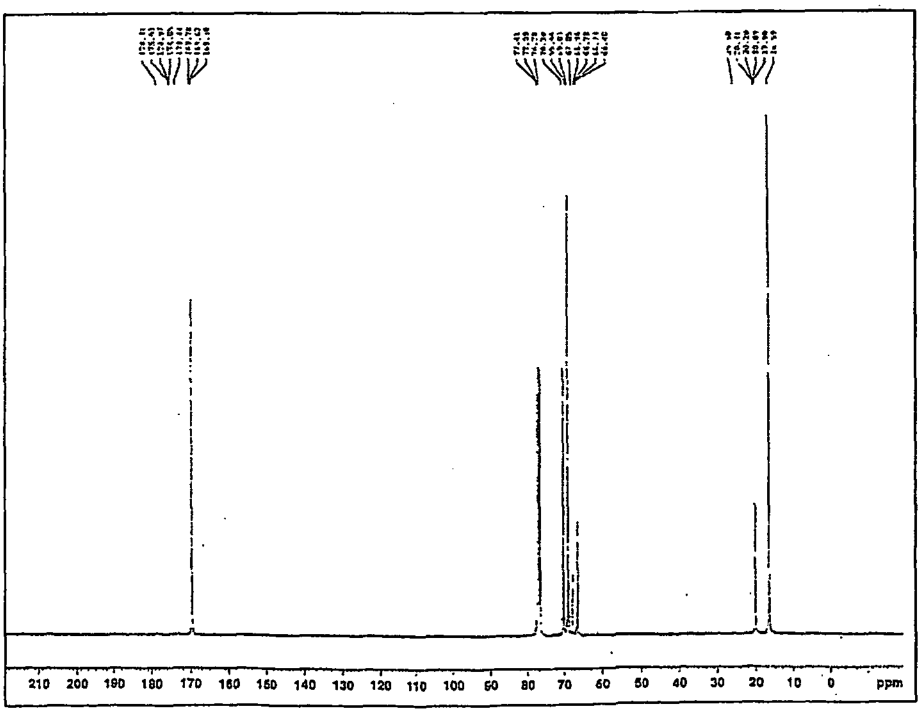

Fig.20b

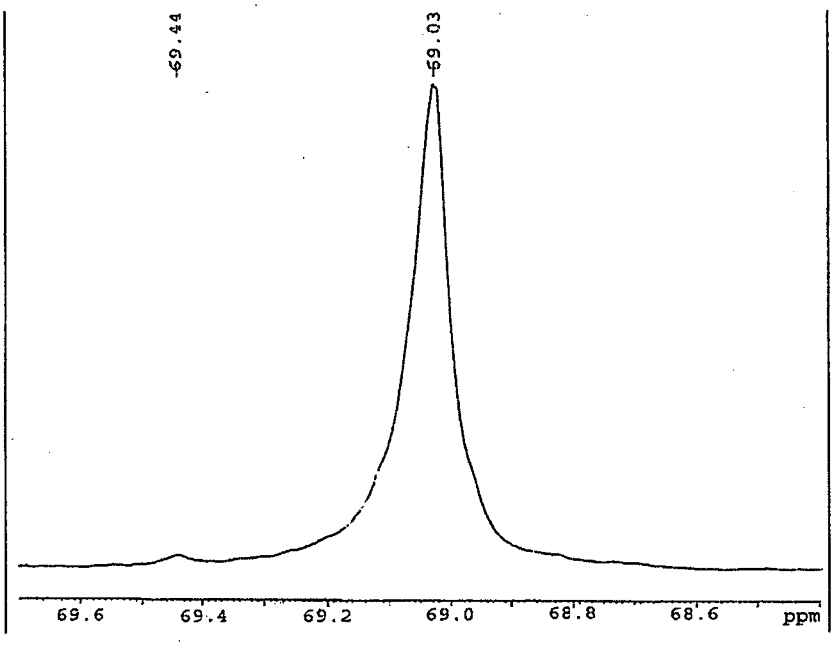


Fig.20c

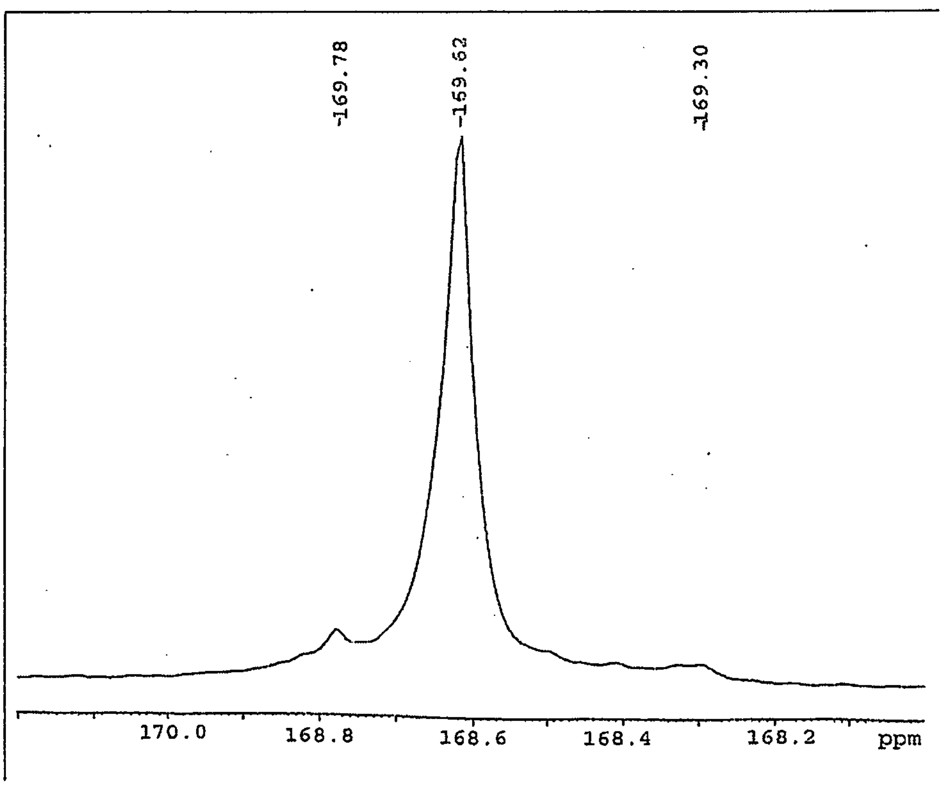

Fig.21a

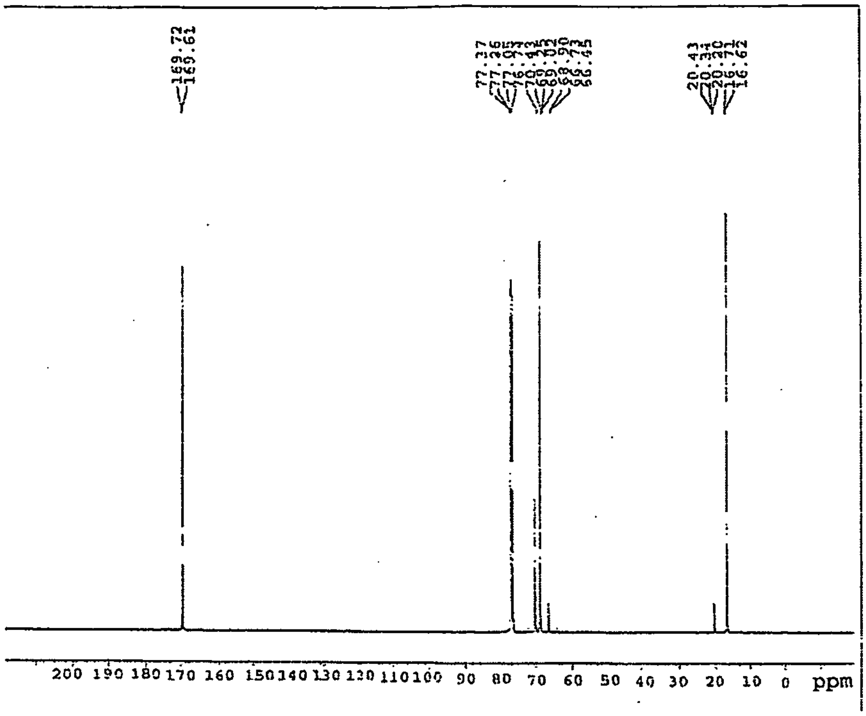

Fig.21b

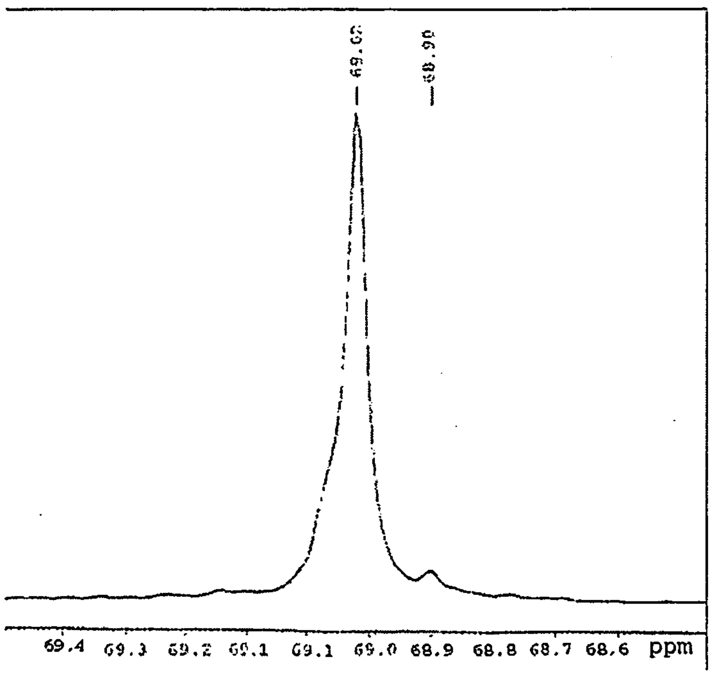

Fig.21c

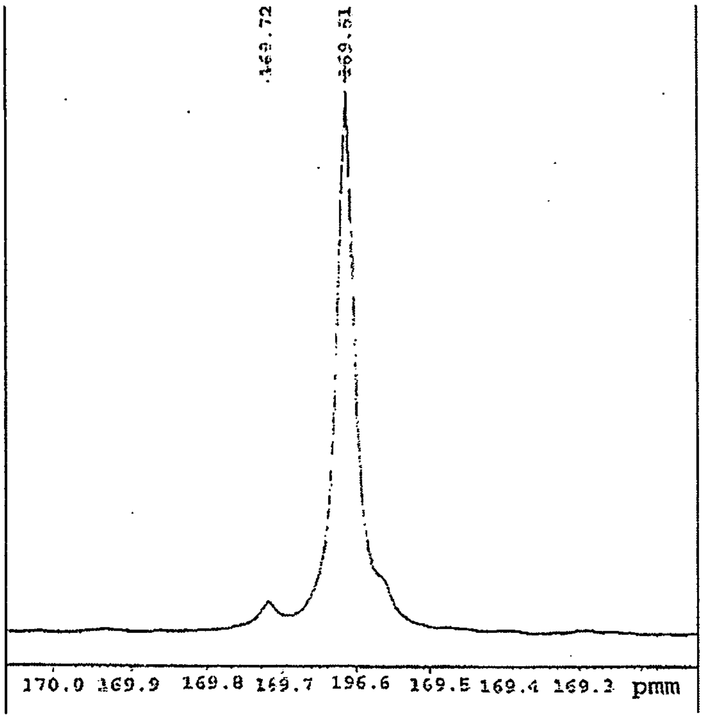


Fig.22a

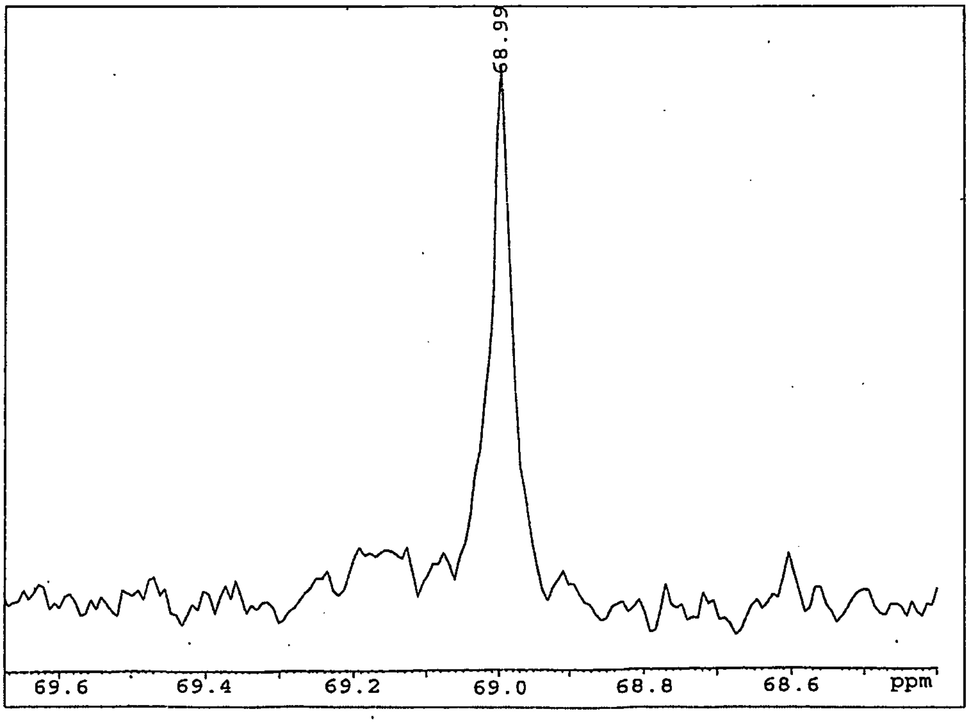

Fig.22b

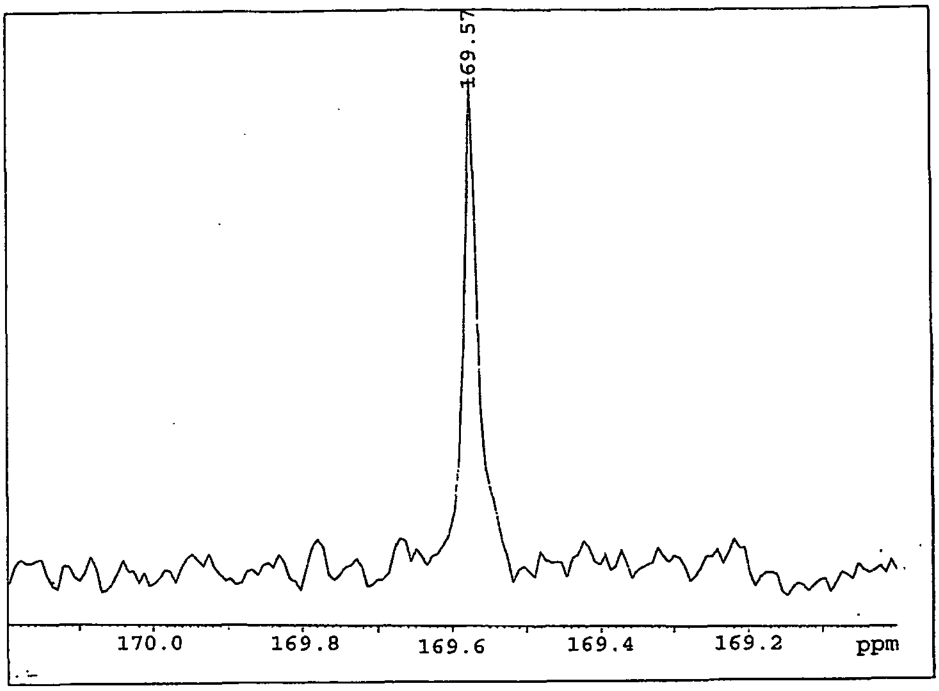


Fig.23

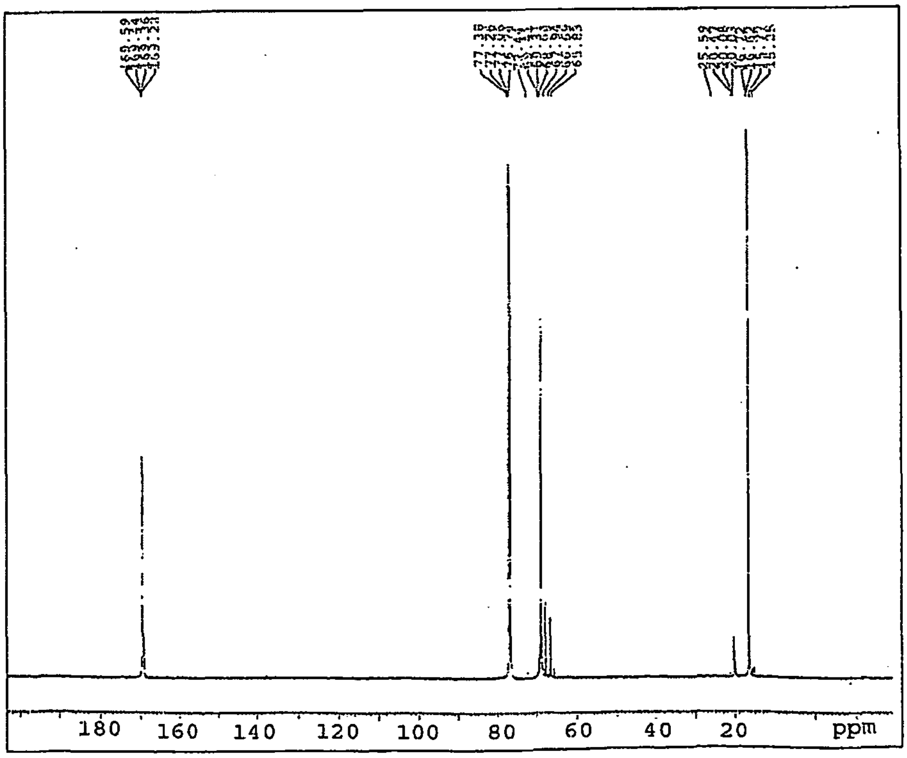

Fig.24

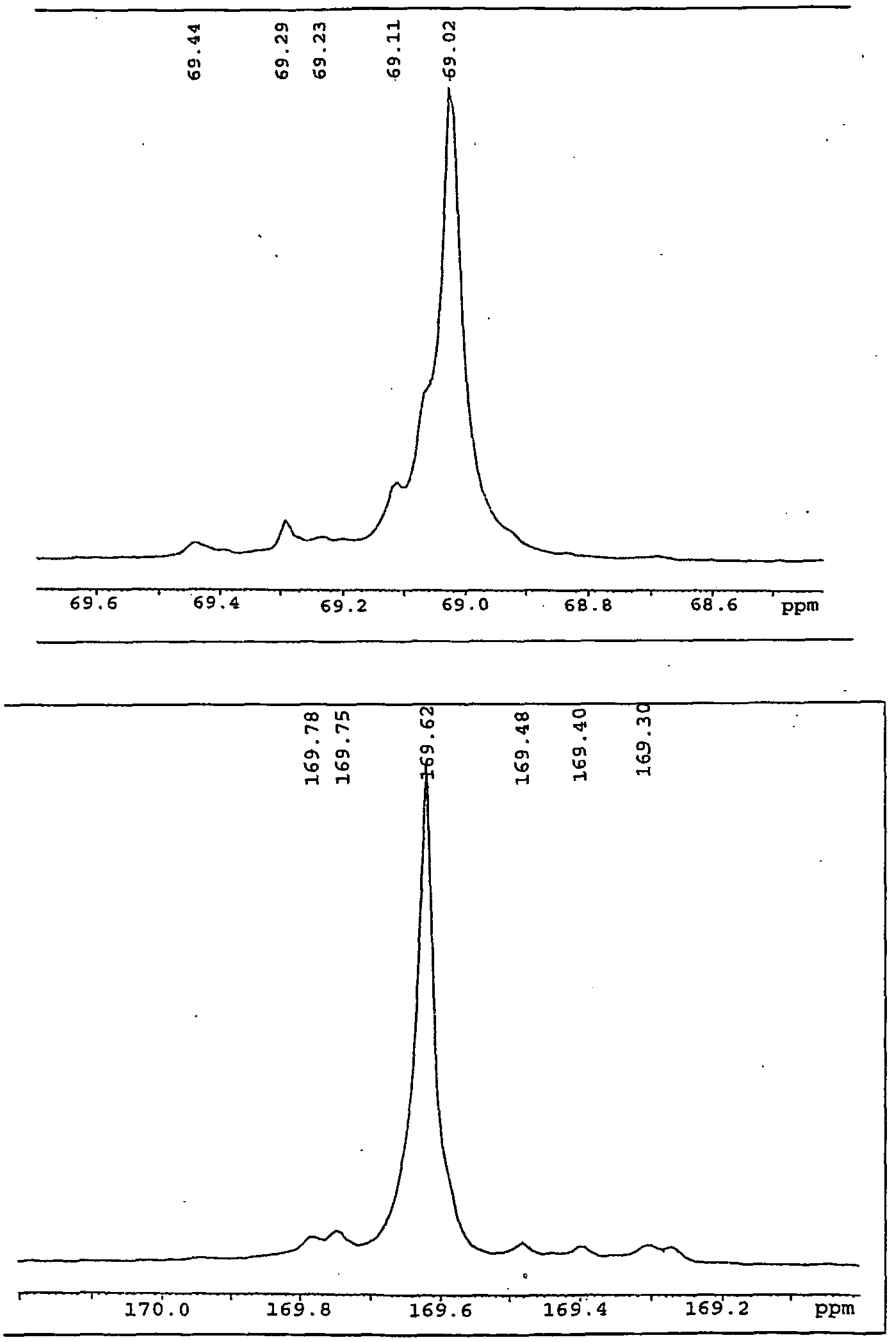
69.44
69.29
69.23
69.11
69.02
69.6
69.4
69.2
69.0
68.8
68.6
ppm
169.78
169.75
169.62
169.48
169.40
169.30
170.0
169.8
169.6
169.4
169.2
ppm

Fig.25a

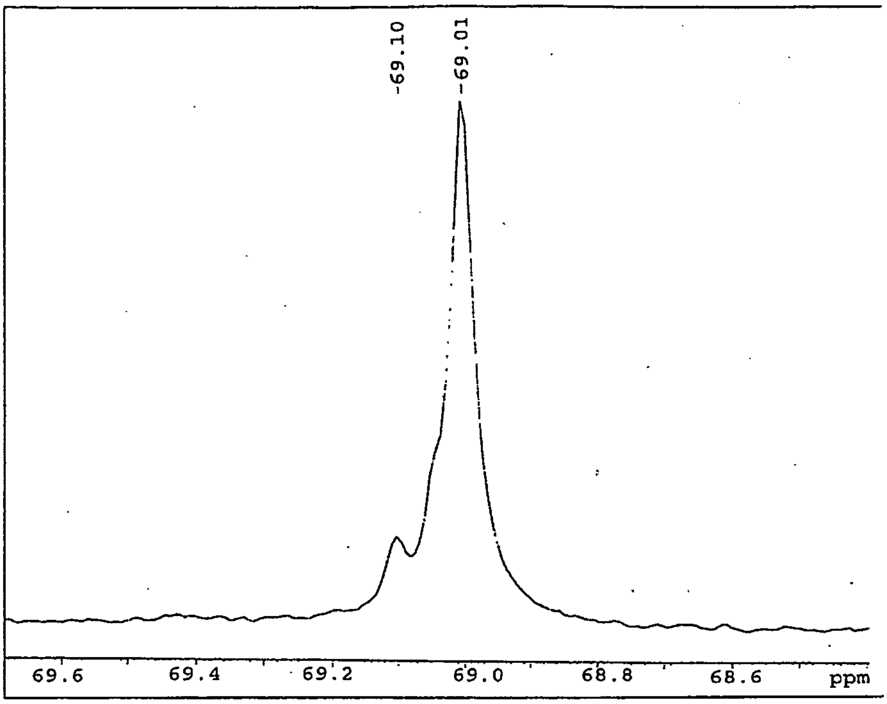


Fig.25b

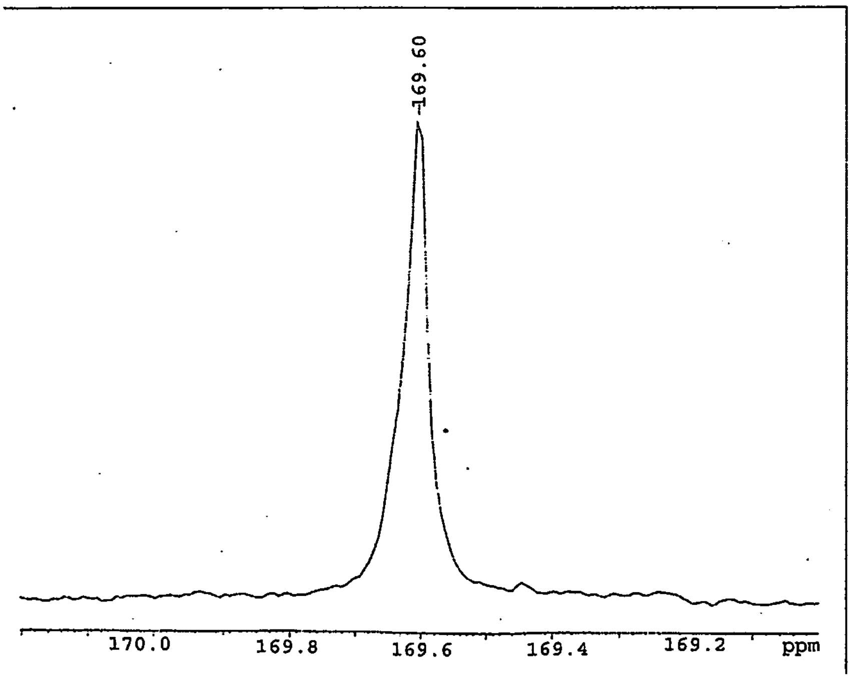

Fig.26a

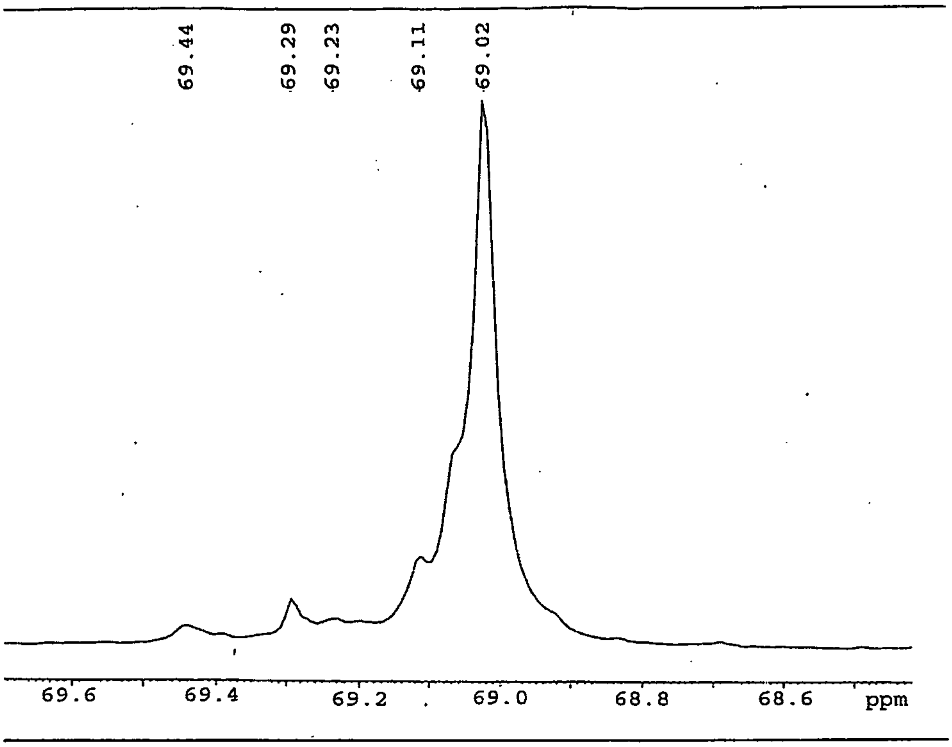


Fig.26b

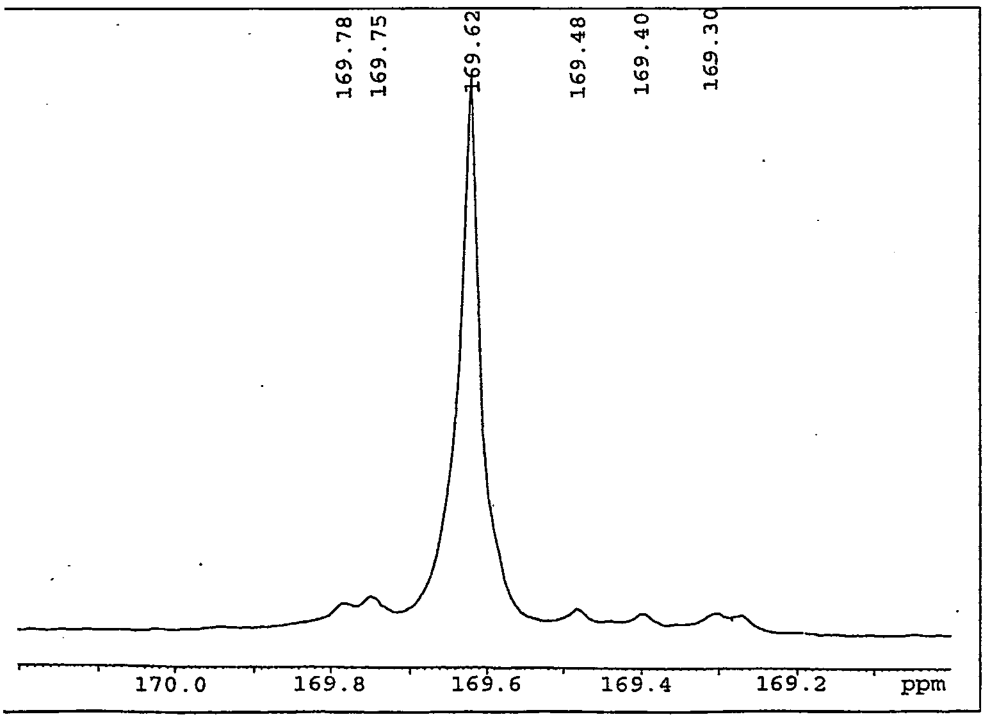

Fig.27a

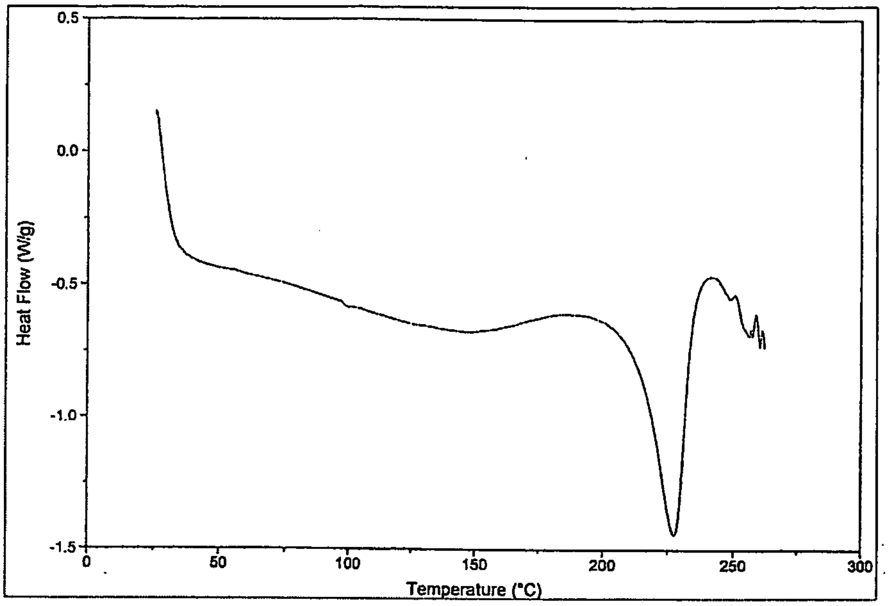


Fig.27b

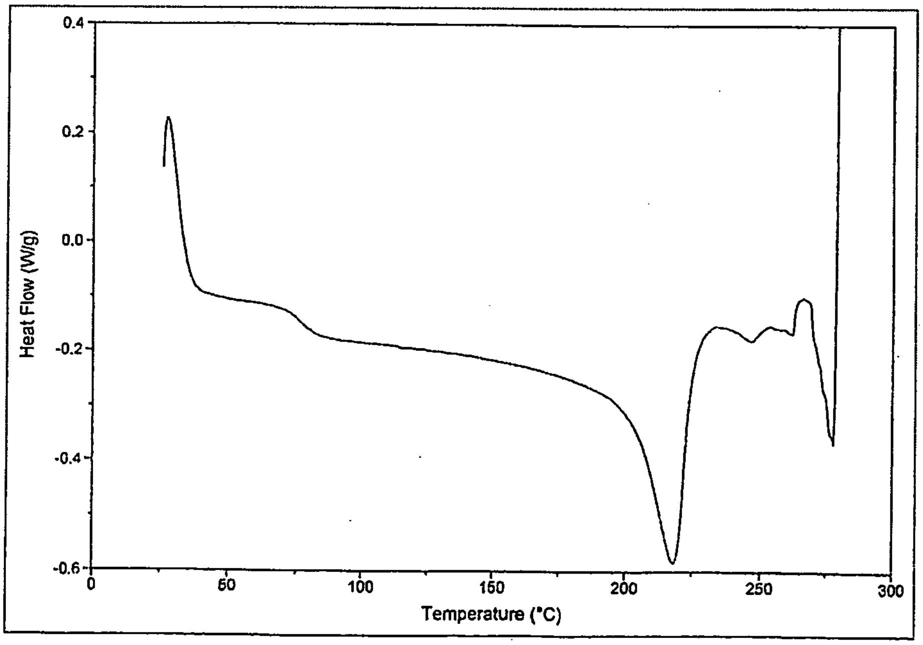

Fig.28a

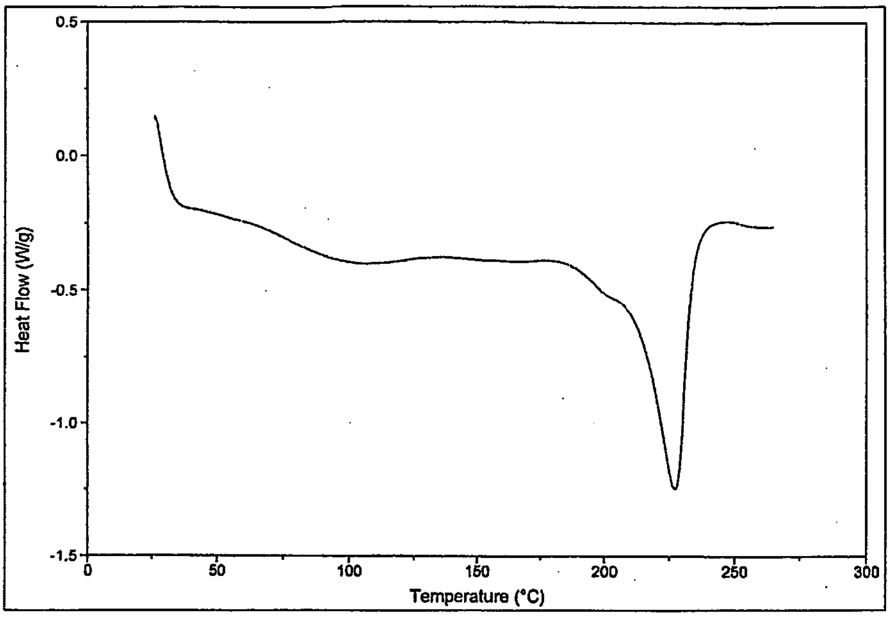


Fig.28b

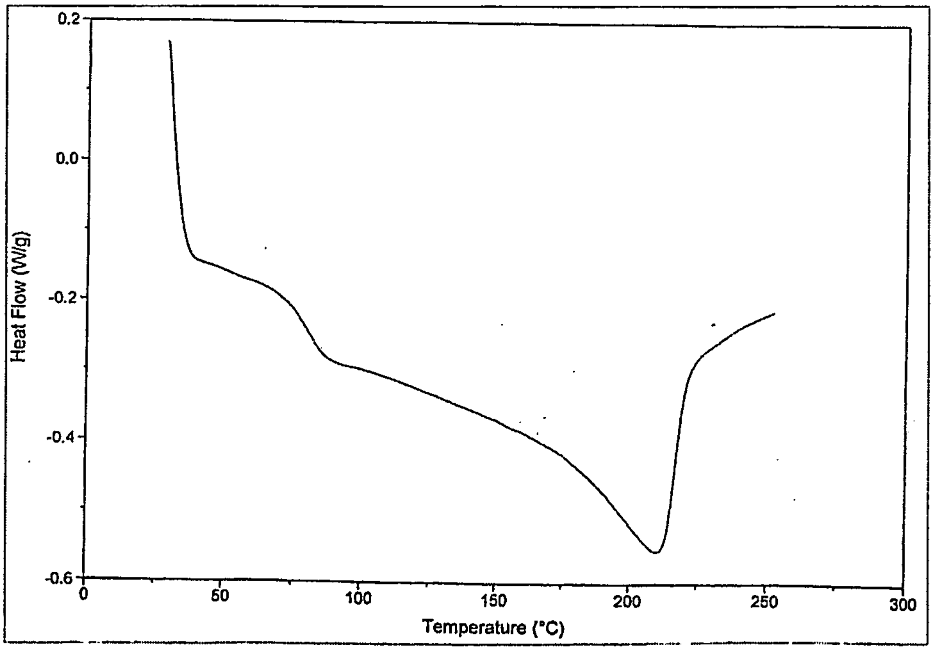

Fig.29a

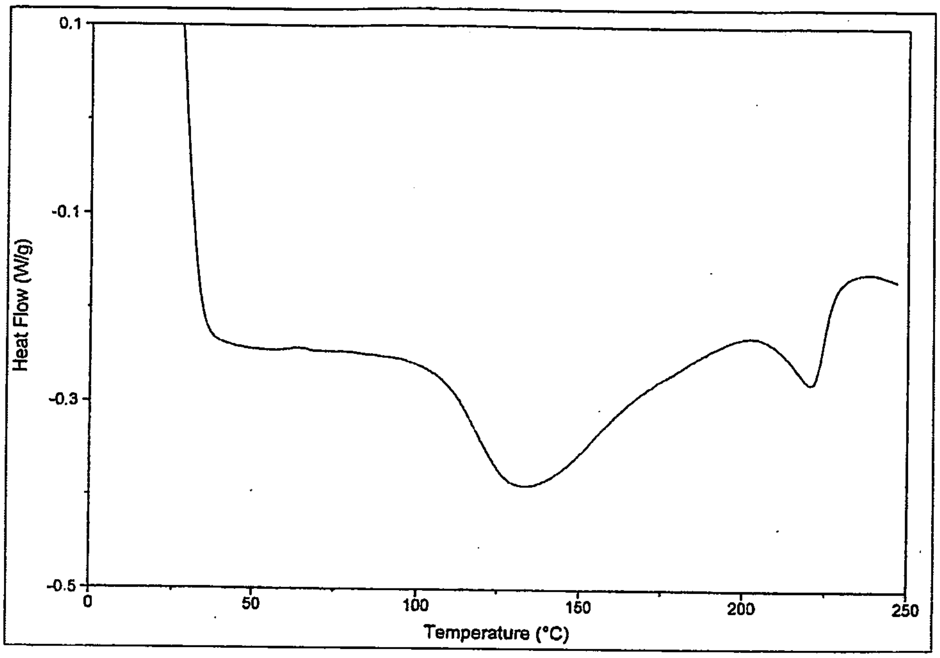


Fig.29b

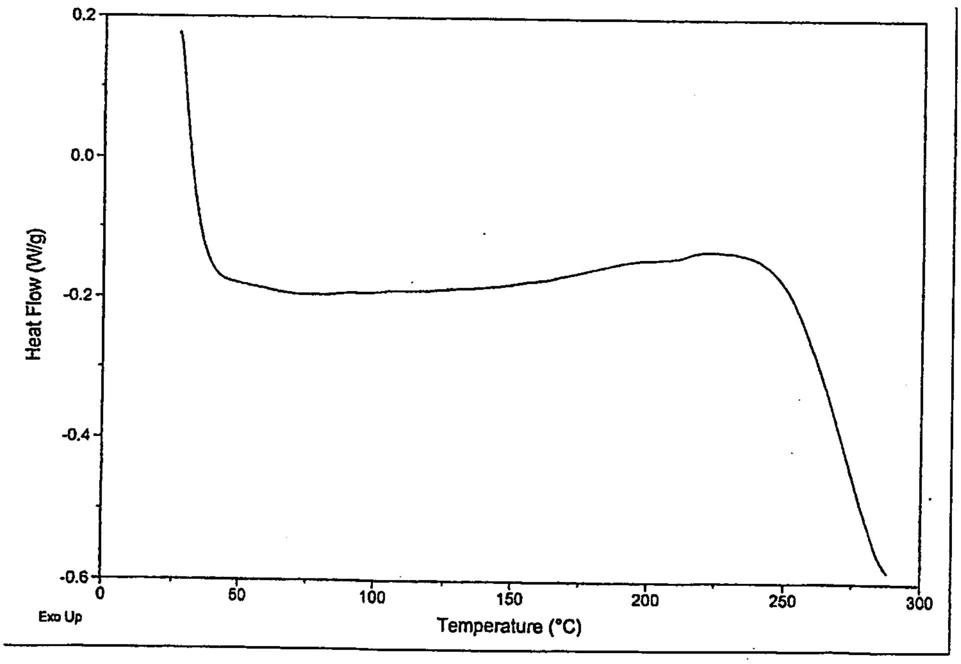

Fig.30a

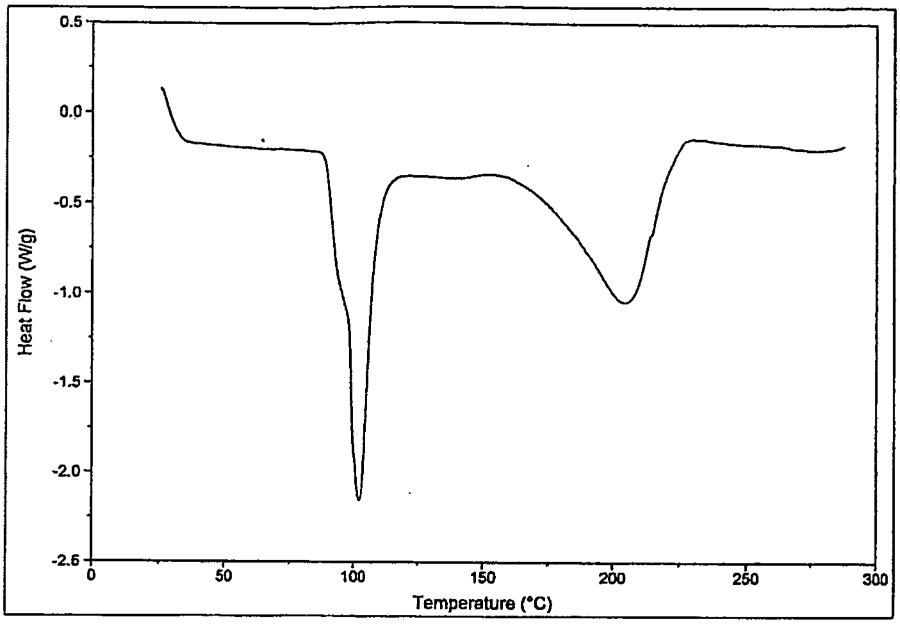


Fig.30b

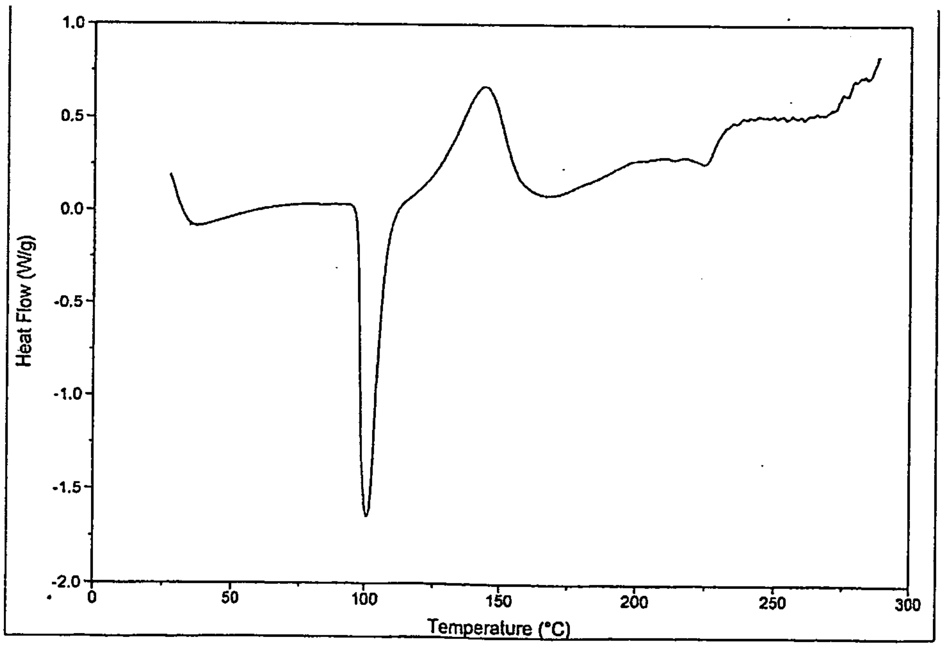

Fig.31a

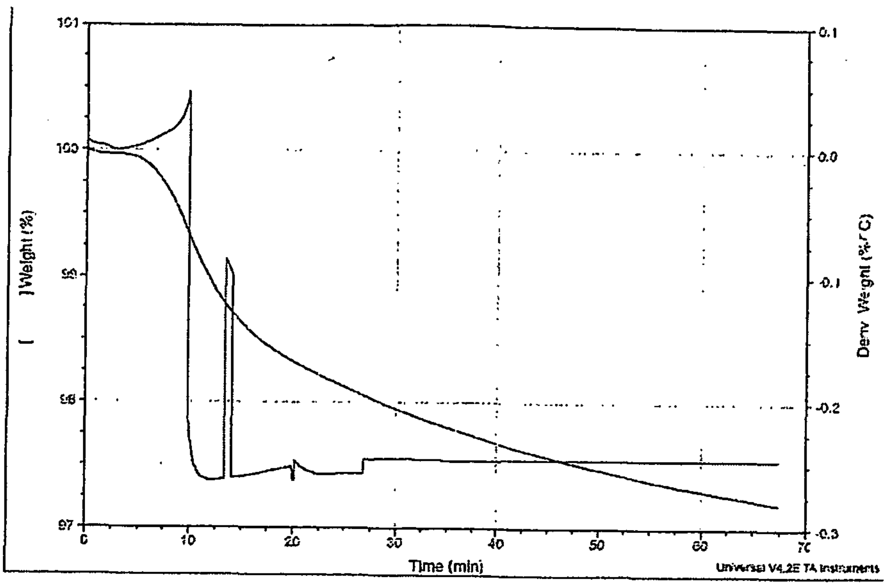


Fig.31b

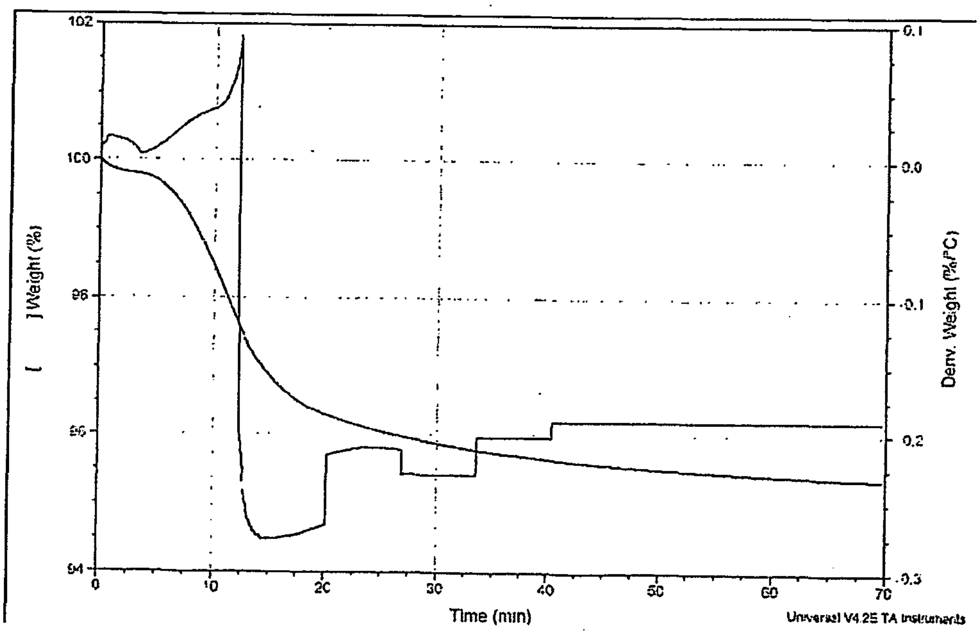

Fig.32a

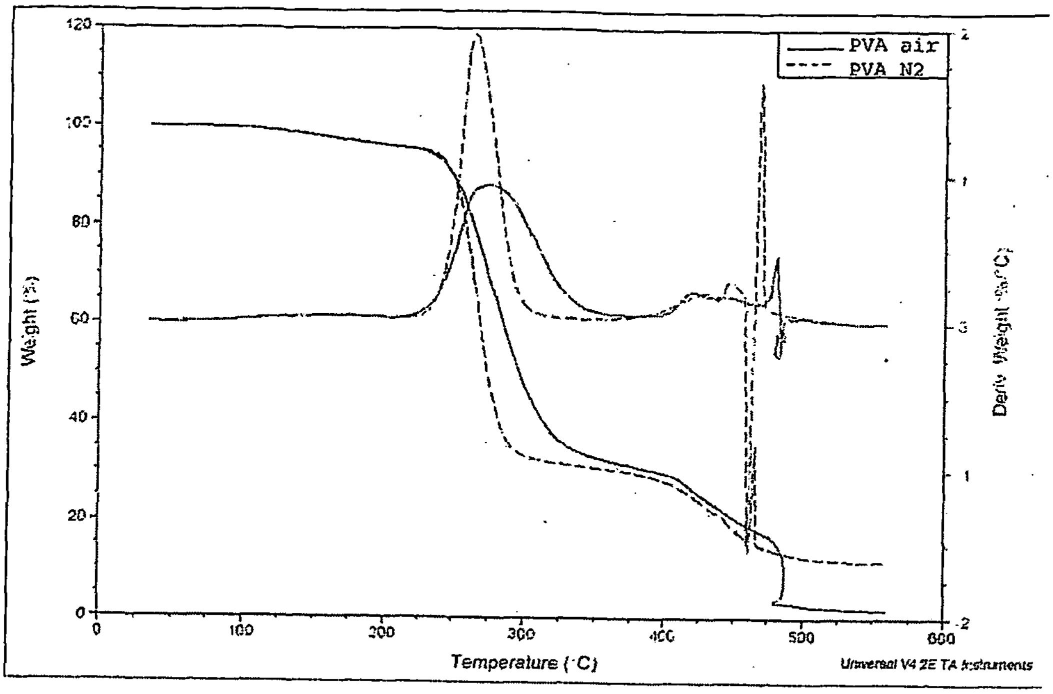


Fig.32b

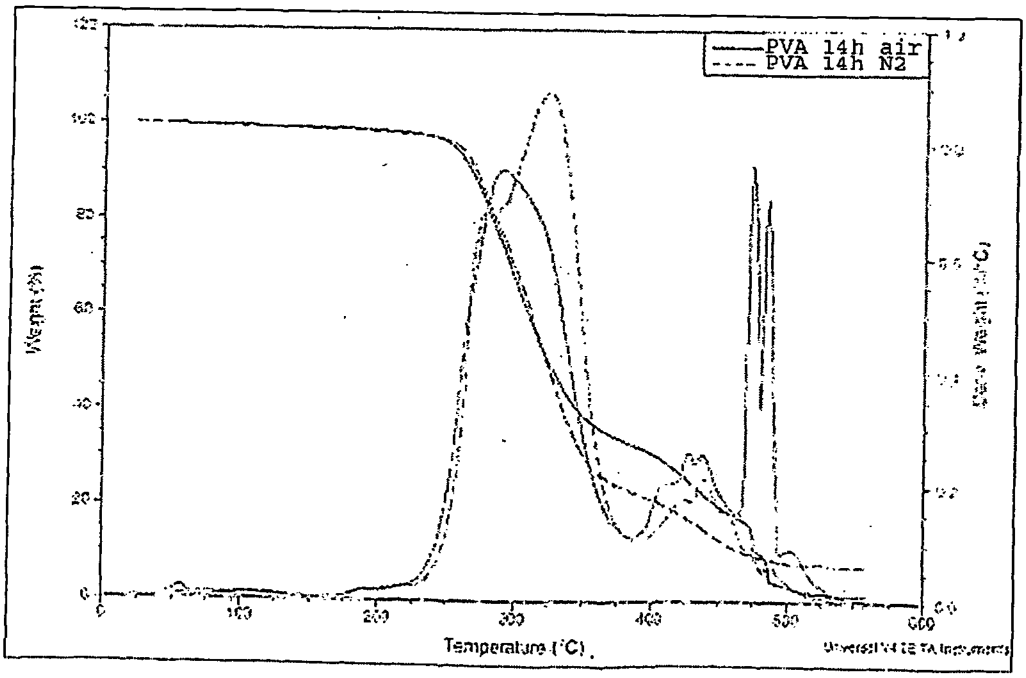

Fig.32c

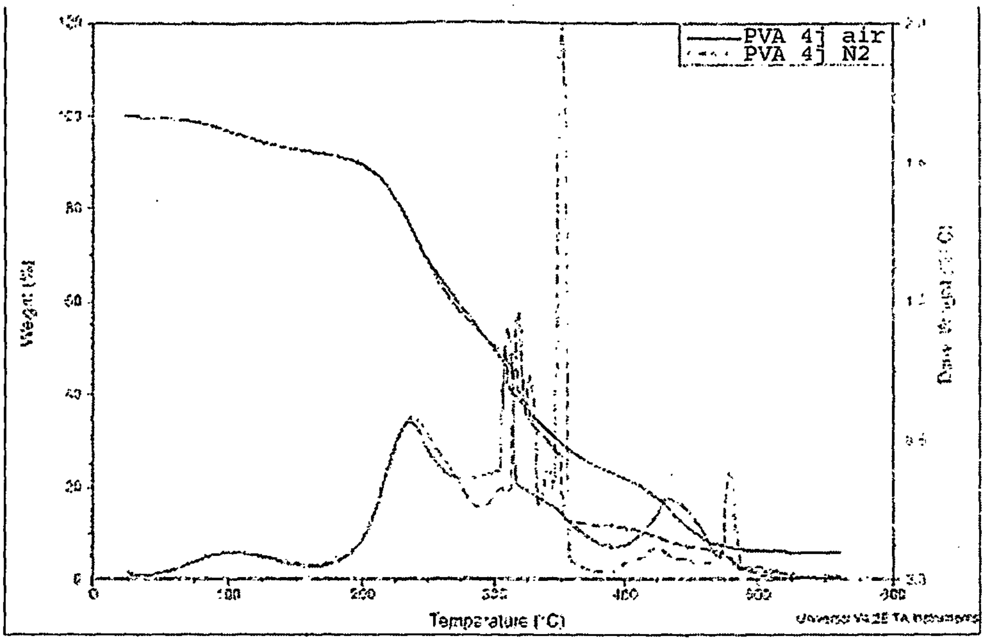


Fig.33

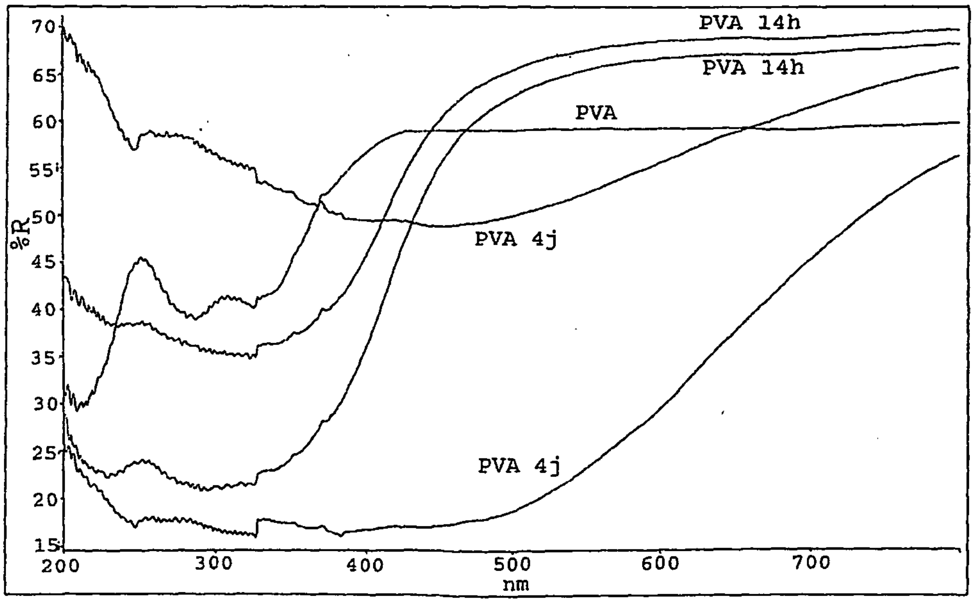

Fig.34

a) PVA :

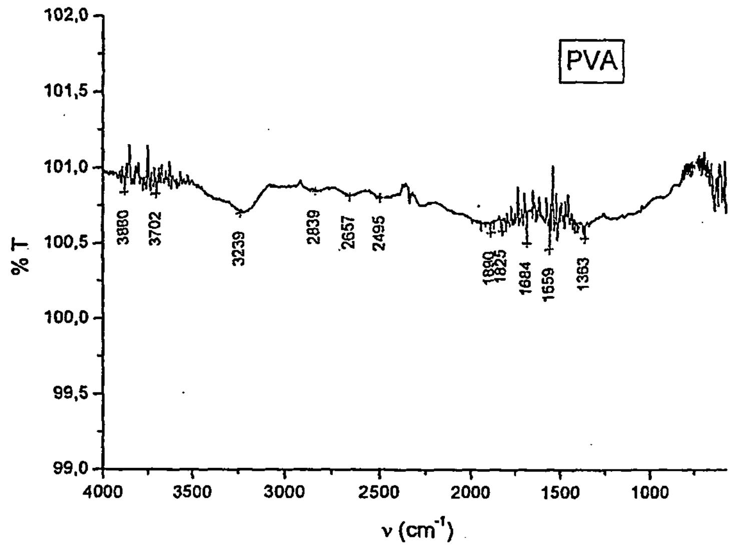


b) PVA 14h :

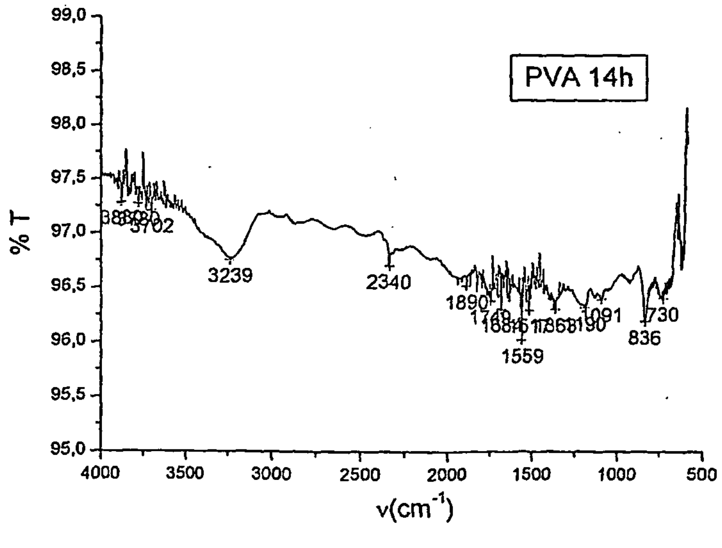

Fig.35

a) PVA 4j :

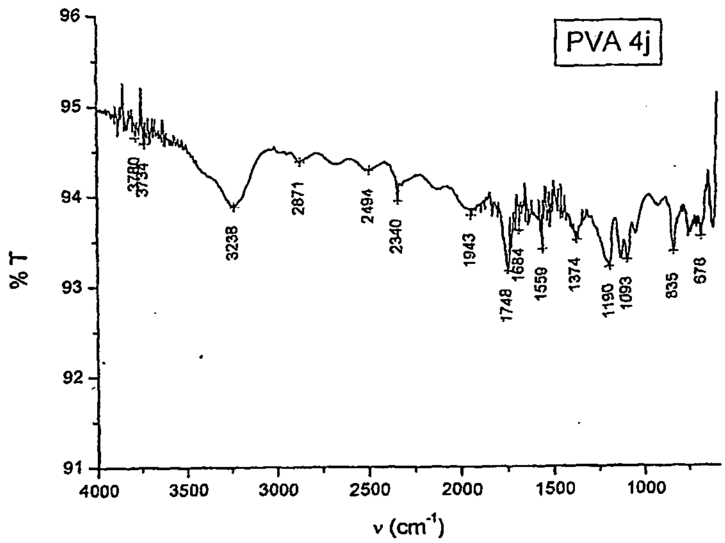


b) Différence PVA 4j – PVA :

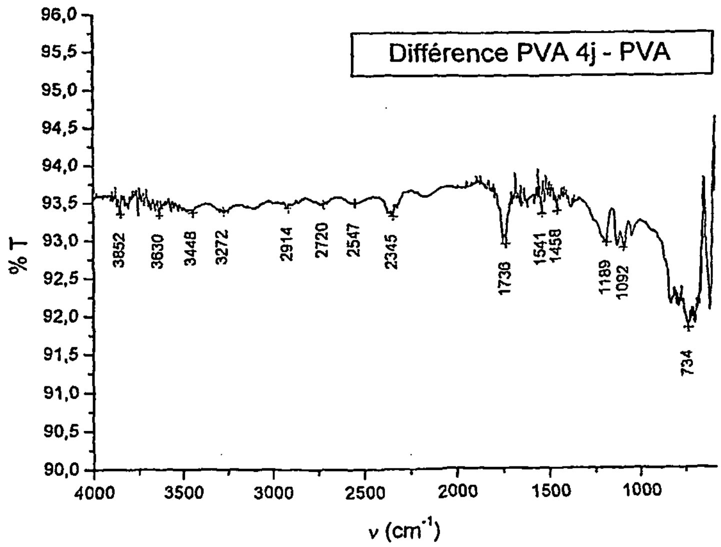

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9719973 A


### Littérature non-brevet citée dans la description


- **RASHKOV et al.** *Macromolecules,* 1996, vol. 29, 50-56
- **RASHKOV et al.** *Macromolecules,* vol. 196 (29), 57-62
- **RASHKOV et al.** *Macromolecules,* 1996, vol. 29, 57-62
- *Macromolecules,* 1996, vol. 29, 58